# EUROPEAN PATENT SPECIFICATION

(11) **EP 3 406 373 B1**
(45) Date of publication and mention of the grant of the patent: **22.12.2021**
(21) Application number: 18173438.5
(22) Date of filing: 21.05.2018
(51) Int. Cl.: B33Y 10/00, B33Y 30/00, B33Y 50/02, B23K 26/342, B29C 64/153, B23K 26/00, B23K 26/03, B23K 26/046, B23K 26/06, B23K 26/082, B23K 26/70, B22F 10/36, B22F 10/368, B22F 12/41, B22F 10/20, B23K 103/02, B23K 103/08, B23K 103/10, B23K 103/18, B22F 10/28, B22F 12/90

(54) **FINE-SCALE TEMPORAL CONTROL FOR LASER MATERIAL PROCESSING**
GENAUE ZEITLICHE KONTROLLE FÜR LASERMATERIALVERARBEITUNG
COMMANDE TEMPORELLE À ÉCHELLE FINE POUR TRAITEMENT DE MATÉRIAU LASER

(30) Priority: 22.05.2017 US 201715601828
(43) Date of publication of application: 28.11.2018
(73) Proprietor: nLIGHT, Inc., Vancouver WA 98665 (US)
(72) Inventor: MARTINSEN, Robert J., Vancouver, WA Washington 98665 (US)
(74) Representative: Loveless, Ian Mark

(56) References cited:
- EP-B1- 0 731 743
- WO-A2-2014/074947
- DE-T2- 60 312 826
- US-A1- 2016 114 431
- JEAN-PIERRE KRUTH ET AL: "On-line monitoring and process control in selective laser melting and laser cutting", PROCEEDINGS OF THE 5TH LANE CONFERENCE, LASER ASSISTED NET SHAPE ENGINEERING, vol. 1, 1 September 2007 (2007-09-01), page 23, XP055442075,
- PURTONEN TUOMAS ET AL: "Monitoring and Adaptive Control of Laser Processes", PHYSICS PROCEDIA, ELSEVIER, AMSTERDAM, NL, vol. 56, 9 September 2014 (2014-09-09), pages 1218-1231, XP029053133, ISSN: 1875-3892, DOI: 10.1016/J.PHPRO.2014.08.038
- WANG DI ET AL: "Mechanisms and characteristics of spatter generation in SLM processing and its effect on the properties", MATERIALS & DESIGN, ELSEVIER, AMSTERDAM, NL, vol. 117, 26 December 2016 (2016-12-26), pages 121-130, XP029896118, ISSN: 0264-1275, DOI: 10.1016/J.MATDES.2016.12.060

## Description

### FIELD

The disclosure pertains to laser material processing.

### BACKGROUND

In recent years, additive manufacturing and 3D printing techniques have grown in popularity as the technology of forming objects with sequential layers has matured and become widely accessible. In particular, it may now be possible for laser-based methods, such as selective laser melting (SLM) and selective laser sintering (SLS), to supplant traditional techniques for manufacturing industrial-grade objects, such as casting and machining. However, numerous obstacles remain. For example, conventional additive manufacturing methods are typically unable to create objects as quickly, or that are as reliable in their finished state, as their traditionally-manufactured counterparts. Furthermore, the created objects often do not have superior precision detail or feature resolution. Accordingly, a need remains for innovation directed to solving the problems and drawbacks associated with conventional additive manufacturing apparatus and methods. WO2014/074947 describes a system and method of using a direct laser in additive manufacturing of metal components.

### SUMMARY

According to the invention, a method, comprising :directing a laser beam to a target along a scan path;determining a modulation for the laser beam, wherein the modulation includes an alternating of an intensity of the laser beam between two or more discrete laser beam power levels, wherein the alternating is based on a detected optical characteristic that indicates melt pool instabilities of a material of the target proximate the scan path; and modulating the laser beam with the determined modulation during the directing of the laser beam along the scan path so as to reduce the melt pool instabilities, is disclosed.

According to further embodiments, apparatus comprise a laser source situated to emit a laser beam; beam coupling optics situated to direct the laser beam to a target to selectively melt a target portion; a controller coupled to the laser source and situated to generate a laser beam modulation signal that modulates a laser beam characteristic, including a modulation of laser beam power comprising an alternation between two or more discrete laser beam powers, at the target portion, based on a detected optical characteristic that indicates melt pool instabilities in the target portion;and a detector electrically coupled to the controller and optically coupled to the target so as to detect the optical characteristic.

Further embodiments are disclosed in dependent claims 2-6 and 8-16.

The foregoing and other objects, features, and advantages of the disclosed technology will become more apparent from the following detailed description, which proceeds with reference to the accompanying figures.

### BRIEF DESCRIPTION OF THE DRAWINGS

FIG. 1 shows a side view schematic of an additive manufacturing apparatus.
FIGS. 2A shows a top view of a laser patterning scan path.
FIGS. 2B-2I show graphs of variables related to a scanned laser beam.
FIG. 3 is a graph of fluence with respect to focus position.
FIG. 4 shows a side view schematic of a laser patterning apparatus.
FIG. 5 shows another side schematic of a laser patterning apparatus.
FIG. 6 is a flowchart of a laser patterning process.
FIG. 7 is a schematic of a laser patterning system.
FIG. 8 is another schematic of a laser patterning system.
FIG. 9 is another schematic of a laser patterning system.
FIGS. 10A-10B are respective top and side views of laser beam melting a metal powder.
FIG. 11 is a top view of a scan path of a laser beam with related parameter graphs.
FIGS. 12-13 are top views laser beam scan path examples.
FIGS. 14A-14B are a top view of a laser beam scan path and a related parameter graph.
FIG. 15 is another top view of an example laser beam scan path.
FIG. 16 is a schematic of a laser apparatus.
FIG. 17 is a flowchart of an example laser processing method.
FIG. 18 is a set of parameter graphs corresponding to laser processing methods.

### DETAILED DESCRIPTION

As used in this application and in the claims, the singular forms "a," "an," and "the" include the plural forms unless the context clearly dictates otherwise. Additionally, the term "includes" means "comprises." Further, the term "coupled" does not exclude the presence of intermediate elements between the coupled items.

The systems, apparatus, and methods described herein should not be construed as limiting in any way. Instead, the present disclosure is directed toward all novel and non-obvious features and aspects of the various disclosed embodiments, alone and in various combinations and sub-combinations with one another. The disclosed systems, methods, and apparatus are not limited to any specific aspect or feature or combinations thereof, nor do the disclosed systems, methods, and apparatus require that any one or more specific advantages be present or problems be solved. Any theories of operation are to facilitate explanation, but the disclosed systems, methods, and apparatus are not limited to such theories of operation.

Although the operations of some of the disclosed methods are described in a particular, sequential order for convenient presentation, it should be understood that this manner of description encompasses rearrangement, unless a particular ordering is required by specific language set forth below. For example, operations described sequentially may in some cases be rearranged or performed concurrently. Moreover, for the sake of simplicity, the attached figures may not show the various ways in which the disclosed systems, methods, and apparatus can be used in conjunction with other systems, methods, and apparatus. Additionally, the description sometimes uses terms like "produce" and "provide" to describe the disclosed methods. These terms are high-level abstractions of the actual operations that are performed. The actual operations that correspond to these terms will vary depending on the particular implementation and are readily discernible by one of ordinary skill in the art.

In some examples, values, procedures, or apparatus' are referred to as "lowest", "best", "minimum," or the like. It will be appreciated that such descriptions are intended to indicate that a selection among many used functional alternatives can be made, and such selections need not be better, smaller, or otherwise preferable to other selections.

As used herein, laser beams and associated optical radiation refers to electromagnetic radiation at wavelengths of between about 100 nm and 10 µm, and typically between about 500 nm and 2 µm. Examples based on available laser diode sources and optical fibers generally are associated with wavelengths of between about 800 nm and 1700 nm. In some examples, propagating optical radiation is referred to as one or more beams having diameters, asymmetric fast and slow axes, beam cross-sectional areas, and beam divergences that can depend on beam wavelength and the optical systems used for beam shaping. For convenience, optical radiation is referred to as light in some examples, and need not be at visible wavelengths.

Representative embodiments are described with reference to optical fibers, but other types of optical waveguides can be used having square, rectangular, polygonal, oval, elliptical or other cross-sections. Optical fibers are typically formed of silica (glass) that is doped (or undoped) so as to provide predetermined refractive indices or refractive index differences. In some, examples, fibers or other waveguides are made of other materials such as fluorozirconates, fluoroaluminates, fluoride or phosphate glasses, chalcogenide glasses, or crystalline materials such as sapphire, depending on wavelengths of interest. Refractive indices of silica and fluoride glasses are typically about 1.5, but refractive indices of other materials such as chalcogenides can be 3 or more. In still other examples, optical fibers can be formed in part of plastics. In typical examples, a doped waveguide core such as a fiber core provides optical gain in response to pumping, and core and claddings are approximately concentric. In other examples, one or more of the core and claddings are decentered, and in some examples, core and cladding orientation and/or displacement vary along a waveguide length.

In the examples disclosed herein, a waveguide core such as an optical fiber core is doped with a rare earth element such as Nd, Yb, Ho, Er, or other active dopants or combinations thereof. Such actively doped cores can provide optical gain in response to optical or other pumping. As disclosed below, waveguides having such active dopants can be used to form optical amplifiers, or, if provided with suitable optical feedback such as reflective layers, mirrors, Bragg gratings, or other feedback mechanisms, such waveguides can generate laser emissions. Optical pump radiation can be arranged to co-propagate and/or counter-propagate in the waveguide with respect to a propagation direction of an emitted laser beam or an amplified beam.

The term brightness is used herein to refer to optical beam power per unit area per solid angle. In some examples, optical beam power is provided with one or more laser diodes that produce beams whose solid angles are proportional to beam wavelength and beam area. Selection of beam area and beam solid angle can produce pump beams that couple selected pump beam powers into one or more core or cladding layers of double, triple, or other multi-clad optical fibers. The term fluence is used herein to refer energy per unit area. In some embodiments, fluence is delivered to a target in along a scan path so as to heat or otherwise laser process the target in a selected area associated with the scan path. Scan paths can have various shapes, including linear, curved, retraced, segmented, etc. Output beams generated by optical systems are directed along the scan paths and can have various brightnesses and uniformity characteristics along one or more axes transverse to the propagation direction. Typical output beams are continuous-wave with various output powers, including average beam powers greater than or equal to 100 W, 500 W, 1 kW, 3 kW, 6 kW, 10 kW, or 20 kW, depending on the particular application. Continuous-wave output beams are digitally modulated as discussed further herein.

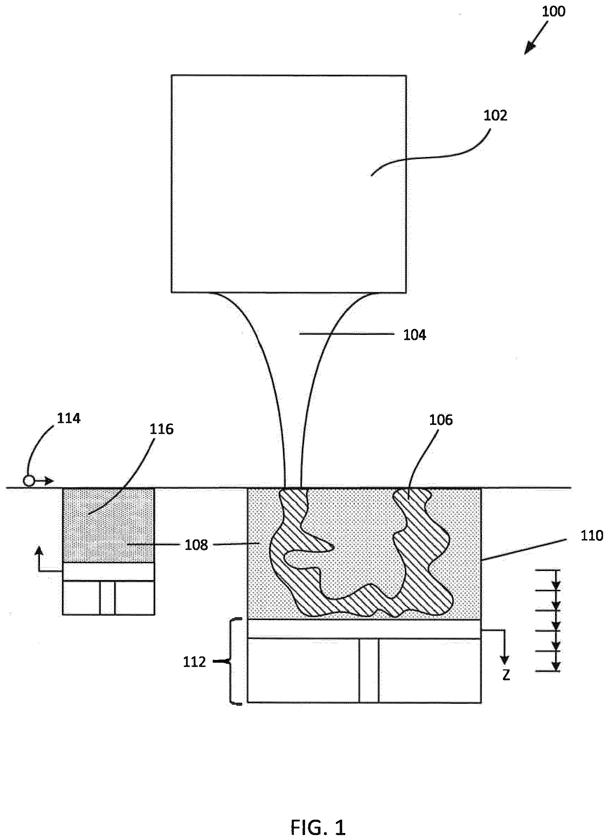

FIG. 1 is an apparatus 100 that includes a laser system 102 emitting and directing a laser processing beam 104 to a target 106 in an additive manufacturing process. The target 106 is generally formed layer by layer from a fine metal powder 108 that is situated in a container 110. Once a layer is laser patterned, a z-stage 112 lowers the container 110 and a new layer of fine metal powder 108 is rolled out with a roller 114 that provides additional fine metal powder 108 from an adjacent reservoir 116. The new layer is then laser patterned, and the process is repeated multiple times with subsequent fine metal powder layers in order to form a three dimensional object.

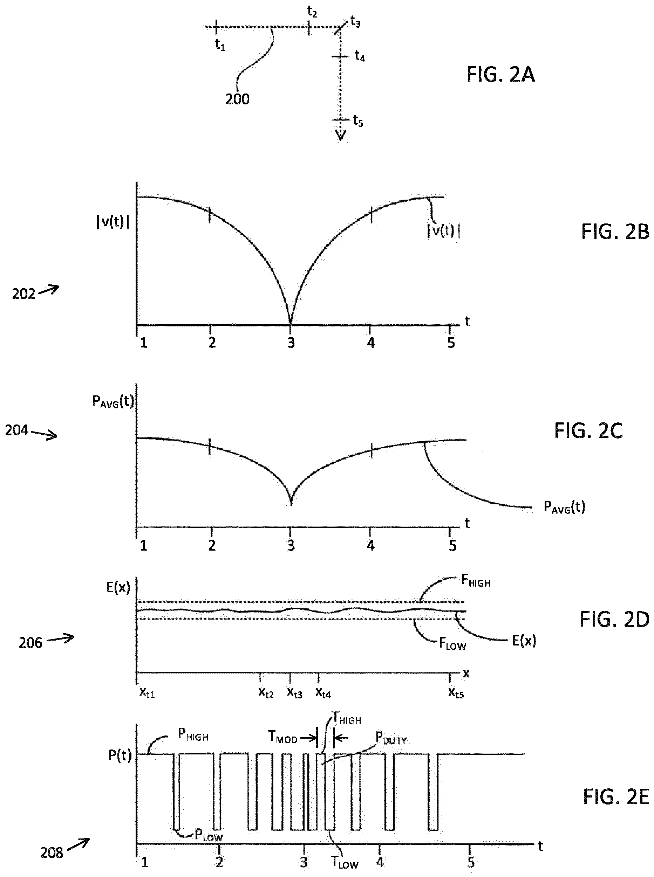

In FIG. 2A an example of a scan path 200 is shown along which a laser processing beam is scanned in the process of laser patterning a target, such as an additive manufacturing target. At a time t₁, the laser processing beam is traveling with scan velocity, e.g., a particular speed and a direction to the right in the plane of FIG. 2A. The scan speed of the laser processing beam begins to slow as the laser processing beam reaches another position at a time t₂ closer to a path corner. At a time t₃, the laser processing beam slows to become momentarily motionless in order to change direction and move downward in the plane of FIG. 2A. At a time t₄, the scan speed of the laser processing beam has increased, and at time t₅ the laser processing beam has reached the same speed as at time t₁.

Below the scan path 200, FIG. 2B shows a graph 202 of speed, |v(t)|, versus time that corresponds with the times t₁-t₅ of the scan path 200. As can be seen, a speed of the laser processing beam has an initial scan speed at t₁, slows to rest at time t₃ where the laser processing beam changes direction, and increases scan speed to a final scan speed at t₅ that can be the same or different from the initial scan speed. Below the graph 202, in FIG. 2C, is a graph 204 of a laser processing beam average power P_{AVG}(t) versus time corresponding with the times t₁-t₅ and the scan path 200, and in FIG. 2D, a graph 206 of fluence E(x) received by a processing target along a scan path, such as the scan path 200. In typical laser process examples, the fluence E(x) should remain within a predetermined range, such as between two thresholds, such as constant thresholds F_{HIGH}, F_{LOW}. In some examples, the thresholds and corresponding predetermined range can vary or be modulated depending on various factors, such as feature size and shape, material-dependent characteristics, such as heating and cooling rates, etc. For example, different targets, or different portions or regions of the same target, can have different material properties. Also, different laser processing effects can be achieved in different process windows, including fluence windows. By maintaining fluence within a corresponding range or ranges, the laser energy can perform the desired change to the target. For example, in a selective laser melting process an excess fluence may damage the target, exacerbating a heat affected zone, and negatively affect various parameters of the finished object, such as tensile strength and reliability. An insufficient fluence can prevent the target material from melting correctly thereby weakening the finished object. By maintaining fluence within a predetermined range during laser processing, the finished object can be fabricated with superior material characteristics.

In some embodiments, in order to maintain fluence E(x) within the predetermined range (e.g., between F_{HIGH} and F_{LOW}), the average power P_{AVG}(t) of the laser processing beam decreases corresponding to beam movement information, such as a decrease in scanning speed |v(t)| of the laser processing beam along the scan path 200. However, for various reasons, a direct continuous decrease in average power P_{AVG}(t) cannot be accomplished or cannot be accomplished in an efficient manner. For example, the laser scanning components, such as mirrors and optics, can move at a speed slower than the laser patterning process demands, resulting in a laser fluence at the target that is above F_{HIGH} or below F_{LOW}. In some instances, the dynamics of a gain medium of a laser source generating the laser processing beam do not respond quickly enough to a desired continuous or discontinuous change to the power level of the laser processing beam.

Below the graph 206, in FIG. 2E, is a graph 208 depicting a modulated power P(t) of the laser processing beam that can produce rapid changes in average power P_{AVG}(t) even with slow scanner dynamics or other laser system deficiencies. The modulated power P(t) alternates between a high power P_{HIGH} and a low power P_{LOW}, and the low power P_{LOW} can be zero or non-zero. The modulated power P(t) includes a variable modulation period T_{MOD} and a variable duty cycle P_{DUTY} that is a percentage of T_{MOD}. In general, as a speed associated with the scanning of a laser processing beam decreases, one or more of the modulation period T_{MOD} and duty cycle P_{DUTY} can change so as to decrease the average power of the laser processing beam and to maintain the fluence received by the target within a predetermined range. In some examples, other information associated with the scan path 200 is used to maintain fluence E(x) within the predetermined range, such as proximity of the scan path 200 to an adjacent portion of the scan path 200 previously scanned (including a retrace), ambient temperature, localized temperature, heating and cooling rates, scan acceleration, scan position, etc. In further examples, a delivered fluence and a peak power of the laser beam delivering the fluence remain within predetermined ranges in accordance with laser process requirements. In particular embodiments, fine features (on the order of microns) are laser processed as laser processing beam scan velocity changes rapidly during the formation of smaller target details. In some embodiments, the modulation period T_{MOD} can be varied so that an average beam power changes based on response dynamics of a gain medium of a laser source generating the beam or other components of the laser source.

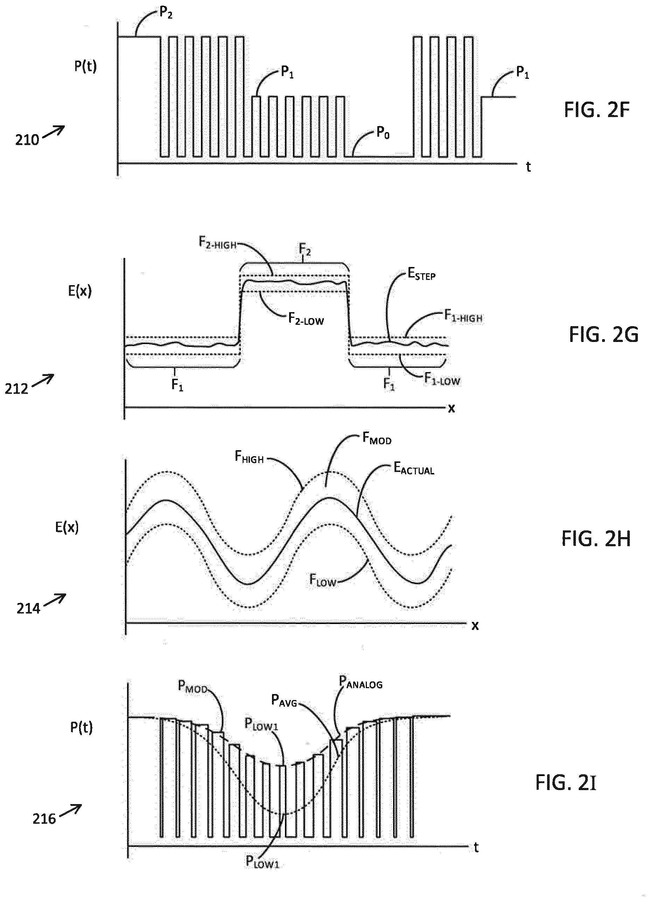

In the example shown in graph 208, at the time t₁ the power of the laser processing beam is constant at power P_{HIGH}. As the speed |v(t)| of the laser processing beam decreases, the laser processing beam changes from constant power to a modulated power, switching from P_{HIGH} to P_{LOW} and back to P_{HIGH} at a frequency associated with the decrease in scanning speed of the laser processing beam. As the speed |v(t)| of the scanning of the laser processing beam continues to decrease as the time approaches t₂ and t₃, the power modulation frequency increases, decreasing the period T_{MOD} and the duty cycle T_{HIGH} / T_{HIGH} + T_{LOW}, wherein T_{HIGH} is a duration during which the power P_{HIGH} is applied and T_{LOW} is a duration in which the power P_{LOW} is applied. The decreased duty cycle reduces the average power P_{AVG} for the laser processing beam and provides the laser processing fluence within the predetermined range. Thus, by adjusting a digital modulation of the power of the laser processing beam, the average power of the laser processing beam can be adjusted so that a fluence may be provided at target that remains within a predetermined fluence range corresponding to the target. With additional reference to graph 210 in FIG. 2F, in some embodiments, the laser processing beam can change to or switch between more than two power levels, such as P0, P1, and P2, and digitally modulated to produce rapid changes in average power and associated fluence. In further examples, a decrease in average laser processing beam power can be provided by adjusting a digital modulation of the laser processing beam such that a power level is within a range of peak powers suitable for performing a laser process.

As discussed above, predetermined fluence ranges can vary according to laser processing factors, and examples herein can produce modulated optical beam powers that maintain fluence within variable fluence ranges. FIG. 2G shows a graph 212 of fluence E_{STEP} with a targeted fluence that varies step-wise from a first fluence F₁ with thresholds F_{1-HIGH}, F_{1-LOW} to a second fluence F₂ with thresholds F_{2-HIGH}, F_{2-LOW}. In some examples, with a constant scan velocity for a laser processing beam, such as with a straight scan path, a digitally modulated beam with a fixed period and duty cycle can provide the first fluence F₁ and an unmodulated beam can provide the second fluence F₂. Digital modulation of the power can allow for more a rapid transition between the first and second fluences F₁, F₂. In FIG. 2H, a graph 214 shows a predetermined fluence range F_{MOD} that varies according to a sinusoid between respective upper and lower fluence boundaries F_{HIGH}, F_{LOW}. The fluence E_{ACTUAL} delivered to a target can be maintained within the fluence range F_{MOD} through a digital modulation of the optical power of the laser processing beam. In some laser processing examples, the frequency of the fluence modulation can be relatively fast, including 1 kHz, 10 kHz, 100 kHz, or greater. In different examples, high frequency fluence oscillation is dependent on or independent from a fluence oscillation phase.

In some examples, an analog modulation can be applied to change the average power of the laser processing beam in conjunction with the digital modulation. However, the analog modulation typically has a slower response time for achieving a desired reduction in average power for maintaining fluence within the predetermined range. To increase process efficiency, and to robustly maintain fluence within a predetermined fluence range irrespective of various system variables such as scanner dynamics, a digital modulation is typically used or a hybrid digital and analog modulation is used to adjust the average power of the laser processing beam and provide more rapid response to preserve fluence within a predetermined range. For example, referring to FIG. 2I, a graph 216 shows a digitally modulated signal P_{MOD} that includes plurality of modulation portions with power maximums that decrease to a minimum power P_{LOW1} according to an analog command signal P_{ANALOG}. The actual average output power commanded and produced for the laser processing beam can include trace a path P_{AVG} that can include a more rapid change in average beam power and a lower minimum power P_{LOW2}.

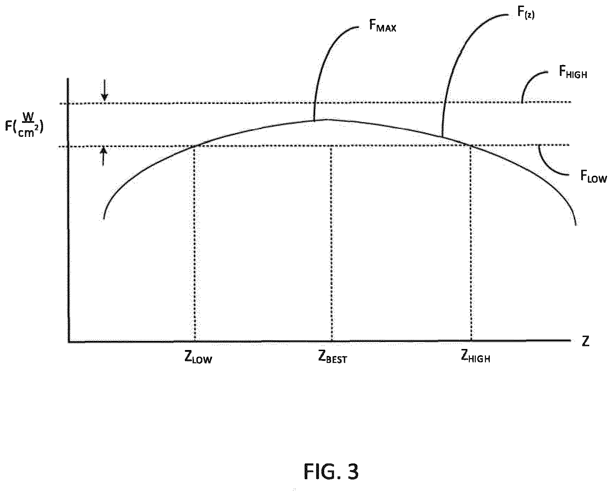

FIG 3. is a graph of fluence F(z) of a laser processing beam with respect to a focus position Z associated a scanner coupled to the laser processing beam. In general, the fluence F(z) is a maximum at a fluence F_{MAX} where the laser processing beam is brought into a best focus position Z_{BEST} in the direction of propagation of the laser processing beam. As the focus distance of the laser processing beam increases or decreases from Z_{BEST}, effectively defocusing the laser processing beam, the fluence associated with the new focus position decreases as the laser processing beam expands and defocuses. During laser processing it is generally desirable for the fluence F(z) of the laser processing beam to remain within fluence boundaries F_{HIGH} and F_{LOW} by constraining or controlling defocus between focus positions Z_{LOW} and Z_{HIGH}, for example, so that the laser process can produce the corresponding change in the target. While the fluence boundaries can be variable, in typical examples the fluence boundaries are fixed. In some embodiments, a 3D scanner is used to scan the laser processing beam at the target with a flatter focal field curvature than an Fθ lens or other scanning optic over a large pattern processing area. Thus, the fluence delivered by the laser processing beam that is scanned at the target is more likely to stay or more easily maintained within the fluence boundaries F_{HIGH}, F_{LOW}.

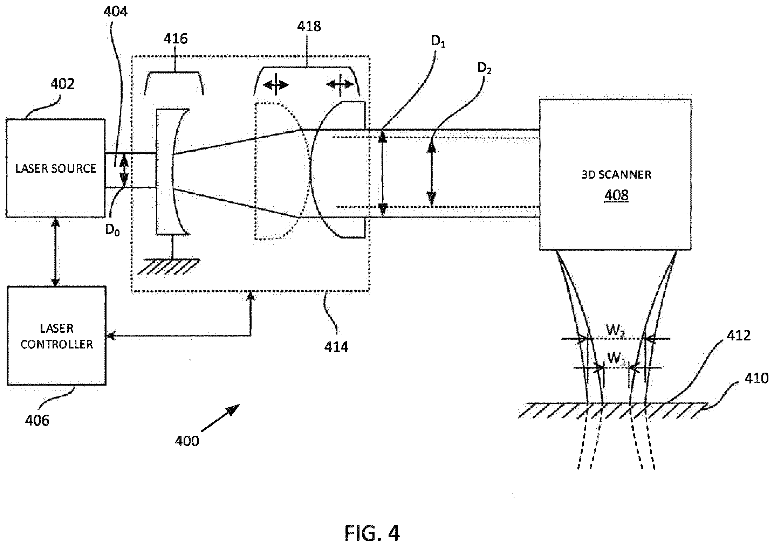

In FIG. 4, an apparatus 400 includes a laser source 402 situated to emit a laser processing beam 404. A laser controller 406 is coupled to the laser source 402 in order to control the power, including a modulated power, of the laser processing beam 404. A 3D scanner 408 is situated to receive the laser processing beam 404 and to direct the laser processing beam to a target 410. With the 3D scanner 408, the laser processing beam 404 is generally brought to focus in a focal plane 412 that is parallel to and aligned with a flat surface of the target 410. However, in some examples, the 3D scanner 408 allows the focal position to vary so as to provide a non-flat focal field that can correspond to a non-uniform target surface. In typical examples, the 3D scanner 408 includes an XY galvanometer scan mirror set and a Z-position focus group that changes the focus position of the of the beam at the focal plane 412 based on the position of the galvo scan mirrors. The apparatus 400 also includes a zoom beam expander 414 situated to receive the laser processing beam 404 with a collimated input diameter D₀ and adjust beam width so that the laser processing beam exiting the zoom beam expander 414 has a same or different collimated diameter D₁ along one or more directions transverse to the propagation path of the laser processing beam. The laser processing beam 404 with the collimated diameter D₁ is received by the 3D scanner 408 and is scanned and focused at the target 410 with a spot size W₁. The zoom beam expander 414 can also adjust the laser processing beam 404 so as to have a collimated diameter D₂ that is smaller than the collimated diameter D₁. The smaller collimated diameter D₂ is received by the 3D scanner and scanned and focused at the target with a spot size W₂ that is larger than spot size W₁ due to the smaller collimated diameter D₂.

The zoom beam expander 414 can be constructed in various ways. In typical examples (and as shown in FIG. 4), the zoom beam expander 414 includes a set of entrance group optics 416 that are fixed and situated to receive the laser processing beam 404 from the laser source 402. A set of exit group optics 418 is situated to receive an expanding beam from the entrance group optics 416 and through movement along an optical axis of one or more optics of the exit group optics 418, increase or decrease the diameter of the laser processing beam 404 emitted from the zoom beam expander 414. To provide the controlled movement for changing the collimated diameter of the laser processing beam 404, the zoom beam expander 414 is coupled to the laser controller 406. By controllably expanding the diameter of the laser processing beam 404 that is optically coupled into the 3D scanner 408, a controlled variation in spot size can be provided at the target for various effects.

In typical examples, different spot sizes produced with the zoom beam expander 414 are used to laser process features at the target 410 of varying size and shape. In some examples, the laser processing beam 404 is scanned with a variable scan velocity along a scan path at the target 410 so that the target receives a fluence in a predetermined fluence range by varying the spot size in relation to the variable scan velocity. In further examples, larger features are laser processed with the laser processing beam 404 with a larger spot size, e.g., with the spot size W₂ and a constant laser processing beam power, and smaller features are laser processed with the laser processing beam 404 with a smaller spot size, e.g., with the smaller spot size W₁ and a typically smaller digitally modulated laser processing beam power. By digitally modulating the laser processing beam power, the laser process can avoid or make optional an analog modulation of the beam power and the fluence delivered to the target can be maintained within a predetermined fluence range for the laser process as changes in spot size occur.

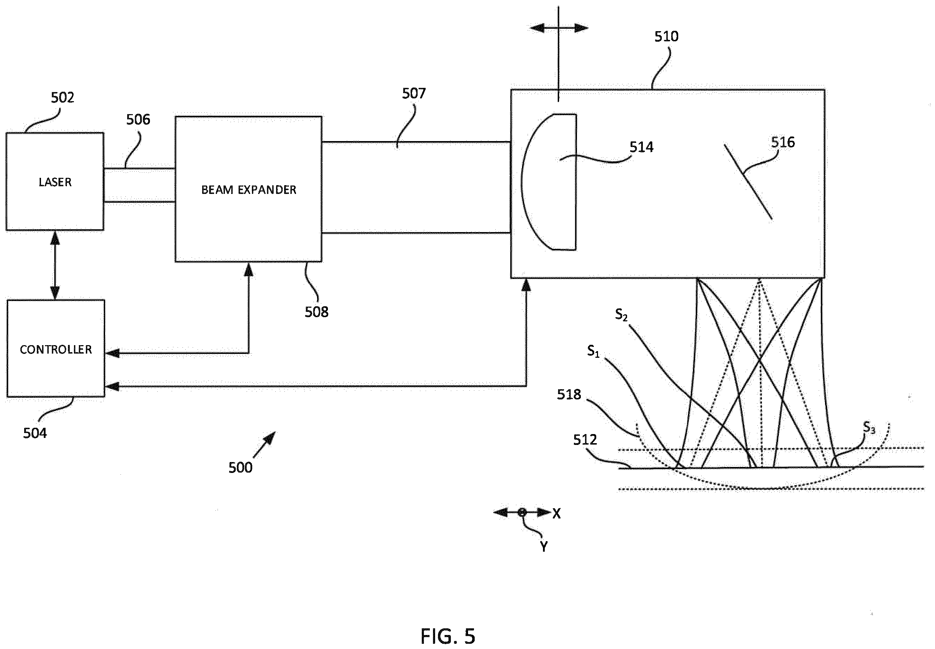

FIG. 5 shows another apparatus 500 that includes a laser source 502 controlled by a laser controller 504 and situated to produce a collimated laser beam 506. A zoom beam expander 508 is situated to receive and to change the diameter of the collimated laser beam 506 to produce an expanded beam 507. A 3D scanner 510 is situated to receive the expanded beam 507 from the zoom beam expander 508 and to focus the expanded beam 507 to a spot in various positions, S₁-S₃, at a target 512. The 3D scanner 510 typically includes variable position focusing optics 514 that receive and focus the expanded beam 507 and a pair of galvo-controlled scan mirrors 516 that receive the focused beam and direct the focused beam to a particular position (typically in a focal plane) aligned with the target 512, e.g., to predetermined X-Y coordinates. The position of the laser beam spot at the target 512 can vary across a scan field associated with the 3D scanner 510. In a scanner that uses a fixed focusing optic, such as an Fθ lens, a field curvature 518 associated with the focal position of the Fθ lens is typically curved. Thus, for a laser beam focused at a position S_{N} toward a periphery of the scan field, such as positions S₁ and S₃, defocus typically occurs. Such defocus can reduce the fluence received by the target 512 so that the fluence is outside of a predetermined range and uneven heating and uneven processing across the scan field can occur. The variable position focusing optics 514 (which can include one or more lenses, mirrors, diffractive optical elements, etc.) of the 3D scanner 510 allows a change in a focus position of the spot in relation to an X-Y position of the spot in the field of the 3D scanner 510. Thus, small adjustments can be made to the focus position of the spot so that field curvature associated with 3D scanner is flatter than other systems. The 3D scanner 510 is coupled to the laser controller 504 so as to receive a scanning and focusing signal that corresponds to pattern data for scanning and focusing the collimated laser beam 506 at the target. The pattern data can be stored in the laser controller 504 or can be received from an external source.

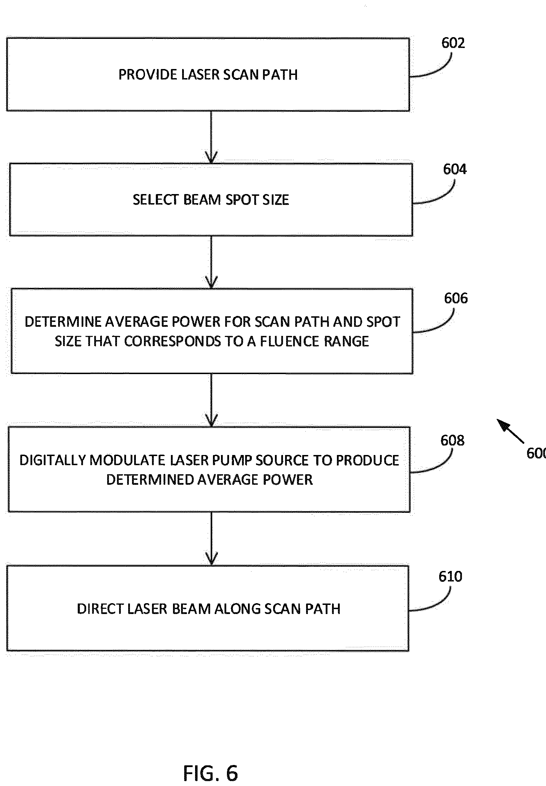

In FIG. 6, a method 600 of laser processing a target includes, at 602, providing a scan path for a laser beam, and at 604, selecting a spot size for the laser beam at the target. For example, a laser beam scan path can be provided to a laser controller with a laser pattern file that includes data related to the position of the laser beam that is to be scanned across the target. The laser beam scan path can also be provided to the laser controller in real time so that receipt of a scan path signal by the laser controller or laser scanner occurs simultaneous with or in close temporal relation to the scanning of the laser beam at the target. At 606, an average power of the laser beam is determined based on the laser beam scan path and the laser beam spot size and a laser beam fluence range associated with laser processing of the target. The power of the laser beam is digitally modulated at 608 through digital modulation of one or more laser pump sources coupled to an active medium that produces the laser beam. The digitally modulated laser beam corresponds to the determined average power at 606, which can change significantly based on the scan path and spot size. At 610, the laser beam is directed along the scan path provided at 602. In further examples, an average power is determined for a scan path and the spot size of the laser beam is varied to correspond to the determined average power. In further examples, both digital modulation and a variable spot size are used to provide an average power to correspond to a predetermined fluence range.

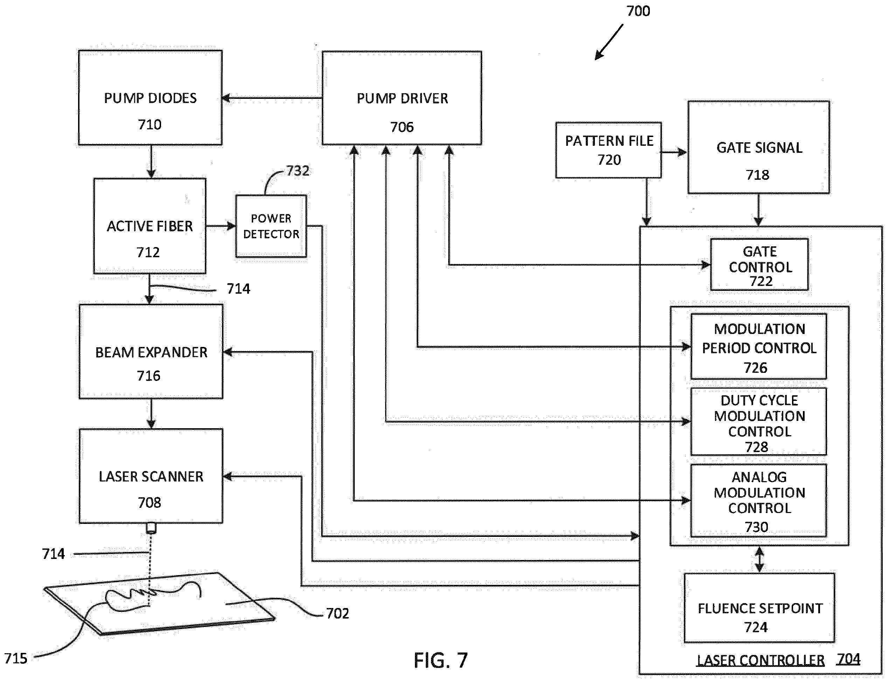

In FIG. 7, a laser system 700 is situated to laser pattern a target 702 with precision control of fluence at the target 702. The laser system 700 includes a laser controller 704 coupled to a pump driver 706, such as a voltage controlled AC/DC power supply or a voltage regulator coupled to a power supply, and laser scanner 708. The pump driver 706 drives pump diodes 710 based on one or more of a voltage and current. The pump diodes 710 are coupled to a laser gain medium, such as an active fiber 712, which uses the energy from the pump diodes 710 to generate a laser system beam 714. The laser system beam 714 is received by a zoom beam expander 716 that can change the collimated width of the laser system beam 714 exiting the zoom beam expander 716 in order to change the size of a focused spot of the laser system beam 714 in the same plane at the target 702 along one or more axes transverse to a propagation direction of the laser system beam 714. The laser scanner 708 receives the laser system beam 714 from the zoom beam expander 716 with a selected collimated beam width and directs the laser system beam 716 to the target 702 in order to process a pattern and deposit along a scan path 715 a laser fluence within a predetermined range associated with a laser process.

In some examples, the laser controller 704 is coupled to a gate signal 718 that provides the controller 704 with first state and second state conditions for the laser system beam 714 and that can be associated with the pattern formed on the target 702. For example, the gate signal 718 can correspond to a laser patterning data file 720 that provides on and off conditions so that as the laser system beam 714 is scanned, various features can be isolated or spaced apart from other features on the target 702 and complex features can be formed. The laser controller 704 includes a gate control 722 that communicates a gate control signal to the pump driver 706 so that the pump diodes 710 are energized to pump the active fiber 712 so as to correspond to the on and off associated with the gate signal. The laser patterning data file 720 can also provide various vector data, such as scan position data, for the laser system beam 714 to be scanned at the target 702. The laser controller 704 is coupled to the laser scanner 708, though in other examples the laser patterning data file 720 can be coupled directly to the laser scanner 708. Various connections can be wired or wireless, and file data can be stored in volatile or non-volatile memory. In further examples, the gate commands of the gate signal are stored in a memory of the laser controller 704.

In order to maintain laser fluence delivered to the target 702 within a predetermined range, the laser controller 704 includes fluence setpoint 724 coupled to a modulation period control 726, a duty-cycle modulation control 728, and an analog modulation frequency control 730, that are also coupled to the pump driver 706. The modulation period control 726 is situated to adjust a digital modulation period of the pump diodes 710. For example, the optical power output of the pump diodes can increase from a slower frequency and corresponding period to a faster frequency (e.g., from 10 kHz to 100 kHz, 200kHz, or faster) and corresponding period or from a continuous on-state (e.g., 0 kHz) so that a power associated with the laser system beam 714 alternates or alternates more rapidly between two or more power levels (e.g., 10 kHz alternating between 10 W and 500 W).

The duty cycle control 728 is situated to adjust a power duty cycle of the pump diodes 710. Duty cycles can range from greater than 90% to less than 10% and can vary in relation to the modulation period. Selected duty cycles are typically large enough so that a suitable amount of laser processing beam energy may be generated in relation to the rise and fall times of the laser processing beam of a selected modulation period so as to maintain laser processing beam average power at a desired level. In some examples, a fixed modulation period is selected and a duty cycle is varied from 100% to less than 10% so as to produce a corresponding reduction in laser processing beam average power. In further examples, a modulation period decreases and a duty cycle decreases to correspond to a reduction in laser processing beam average power so that fine details associated with changes in scan velocity can be formed with the laser processing beam.

The modulation period control 726 and the duty cycle control 728 can produce a modulation change based on the fluence setpoint 724 in order to decrease or vary an average power of the laser system beam 714 at the target. In some embodiments, the decrease in average power can be associated with a decrease in the size of the spot of the laser system beam 714 at the target 702 or a change in beam scan velocity, such as a decrease in scan speed or change in scan direction, of the laser system beam 714 being scanned with respect to the target 702. The power of the laser system beam 714 can be detected by a power detector 732 coupled to one or more system components, such as the active fiber 712, with a corresponding signal of the detected power being coupled to the controller 704. The detected power of the laser system beam 714 can be used for general monitoring, emergency cutoff, etc., and also to assist in determining whether laser fluence remains within, above, or below one or more thresholds, boundaries, tolerances, etc., during laser processing. For example, the detected power can be compared with an average power calculated based on a particular digital modulation settings and the modulation period control 726 and duty cycle control 728 can scale or adjust modulation period and duty cycle to produce the laser system beam 714 with an average power that corresponds with the fluence setpoint 724. For example, the laser system 700 can be coupled to different types of laser scanners, pump diodes, active fibers, etc., each which could affect dynamics of the laser system 700 and the extent to which digital modulation adjustment affects fluence deposition.

In some examples, a digital modulation period and duty cycle that are adjusted based on the fluence setpoint 724 can be defined by the gate signal 718 prior to the coupling of the gate signal 718 to the laser controller 704. In further embodiments, the pattern file 720 can be coupled to the controller 704 and the gate signal 722 need not be externally provided. In additional embodiments, the analog modulation control 730 also is used to assist in maintaining laser fluence at the target 702 by combining it with the modulation period control 726 and the duty cycle control 728. Typically, the analog modulation of the output power of the laser system beam 714 alone responds too slowly to maintain the delivered laser fluence at the target 702 within the predetermined range associated with the fluence setpoint 724 or the fluence requirements of the laser process. Typically, this inability can be associated with dynamics of the electronics of the controller 704 or the pump diodes 710 and active fiber 712. However, dynamics of the zoom beam expander 716 and the laser scanner 708 can also vary. Thus, by using the modulation period control 726 and the duty cycle control 728 to digitally modulate the pump diodes 710, laser fluence delivered to the target 702 can be maintained within a predetermined range even with slow or inconsistent dynamics between various components of the laser system 700. In some examples, the combined effect on laser fluence from the modulation period control 726, duty cycle control 328, and the analog modulation control 730 can advantageously maintain fluence at desired levels.

In further examples, the modulation period control 726 can also adjust modulation period based on the pattern file 720 or other data associated with the laser scan path 715. In patterns associated with the target 702 where fine features are produced, such as multiple features in proximity to each other, the total heat load can affect laser process fluence thresholds for adjacent or retraced features. Modulation period control 726 and duty cycle control 728 can adjust power of the laser system beam 714 based on a delivered heat load to the target 702, a predicted or measured temperature associated with one or more portions of the target 702, or the dwell time of the laser system beam 714 in one or more areas of the target 702, etc. For example, the laser system beam 714 can be digitally modulated through a first scan movement change relative to the target 702 (e.g., a first turn of the laser system beam 714) in the laser scan path 715 and can be digitally modulated to reduce an average power of the laser system 714 to a greater extent during a second turn in proximity to the first turn.

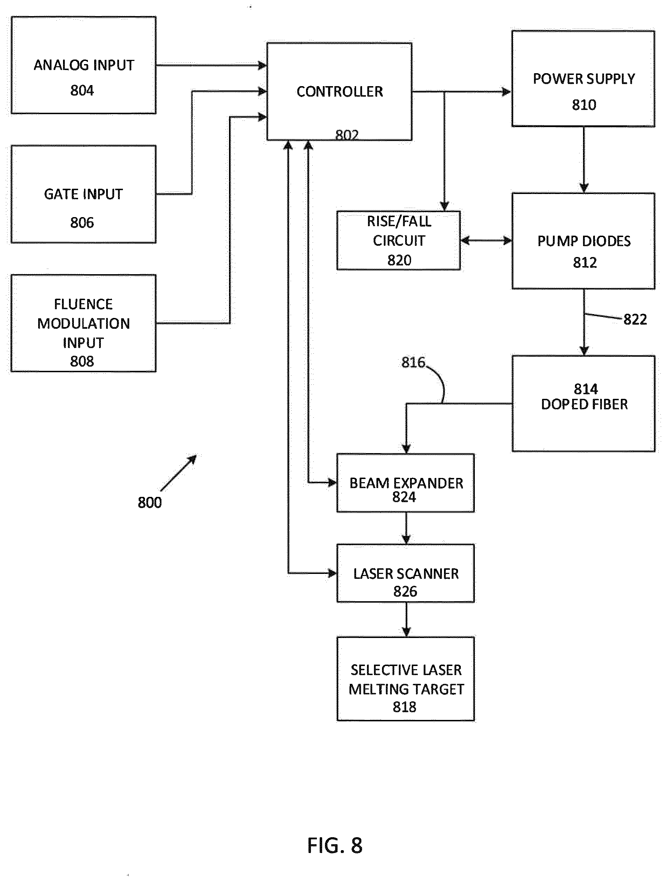

In FIG. 8, a laser system 800 includes a controller 802 situated to receive an analog signal at an analog input 804, a gate signal at a gate input 806, and a fluence modulation signal at a fluence modulation input 808. The controller 802 typically uses the gate signal to modulate or vary power provided by a power supply 810 to laser pump diodes 812, typically by varying drive currents supplied to the laser pump diodes 812. The laser pump diodes 812 are optically coupled to a doped fiber 814, or other laser gain medium that generates a laser system beam 816. The power of the laser system beam 816 can increase and/or decrease corresponding to the modulation of the gate signal, for example, so as to decrease between processing non-contiguous portions of a selective laser melting (SLM) target 818. A rise-fall circuit 820 is coupled to the controller 802 and the pump diodes 812 to control a rise time and a fall time of a pump current provided to the pump diodes 812 by the power supply 810. By controlling the rise time and fall time of the pump current, associated rise times, fall times, overshoots, and undershoots of one or more pump beams 822 generated by the pump diodes 812 can be selected. In some examples, suitable response times for the pump beams 822 can be balanced against pump diode reliability. The laser system beam 816 generated by the doped fiber 814 is also coupled to a zoom beam expander 824 situated to change the spot size of the laser system beam 814 that is focused through a laser scanner 826 into the same plane at the SLM target 818. Rise times are typically defined as the duration required for a parameter, such as laser beam power, to rise from a selected portion of a steady state value to another selected portion of the steady state value, e.g., 2% and 98%, 5% and 95%, 10% and 90%, 1% and 95%, etc. Fall times can be similarly defined as a duration for a fall from a steady state value. Initial values or steady state fall values can be zero or non-zero. Overshoots and undershoots can be defined as a percentage of a steady state value.

The fluence modulation signal can also be used to modulate, vary, or control the laser system beam power to the same or different power levels associated with the gate signal. The fluence modulation signal can be used to digitally modulate the pump currents of the pump diodes 812 so that an average power of the laser system beam 816 is varied corresponding to a variable velocity of the laser system beam 816 being scanned by the laser scanner 826 at the SLM target 818. For example, a decrease in digital modulation period or a reduction in duty-cycle for the same period can cause a rapid reduction in average power of the laser system beam 816. The variable velocity of the laser system beam 816 scanning along the scan path, or the change in spot size of the laser system beam 816 with the beam expander 824, can produce an undesirable fluence variation at the SLM target 818 that can adversely affect the suitability of the finished product, and the fluence modulation signal can be used to compensate for the fluence variation. The fluence modulation signal can also be used to digitally modulate the pump currents to adjust a power of the laser system beam 816 to correspond to different spot sizes produced by the zoom beam expander 824. In some embodiments, the fluence modulation signal and the gate signal can be provided through a common input. In further embodiments, the fluence modulation signal can be used to modulate or vary the spot size of the laser system beam 814 with the zoom beam expander 824 so as to adjust the average power of the laser system beam 814. For example, the spot size can be varied to different sizes that correspond to the variation of the scan velocity of the laser system beam 816. Also, the spot size can be modulated so as to alternate between two or more different sizes, with different modulation periods and duty cycles, so as to alter the average power of the laser system beam 816.

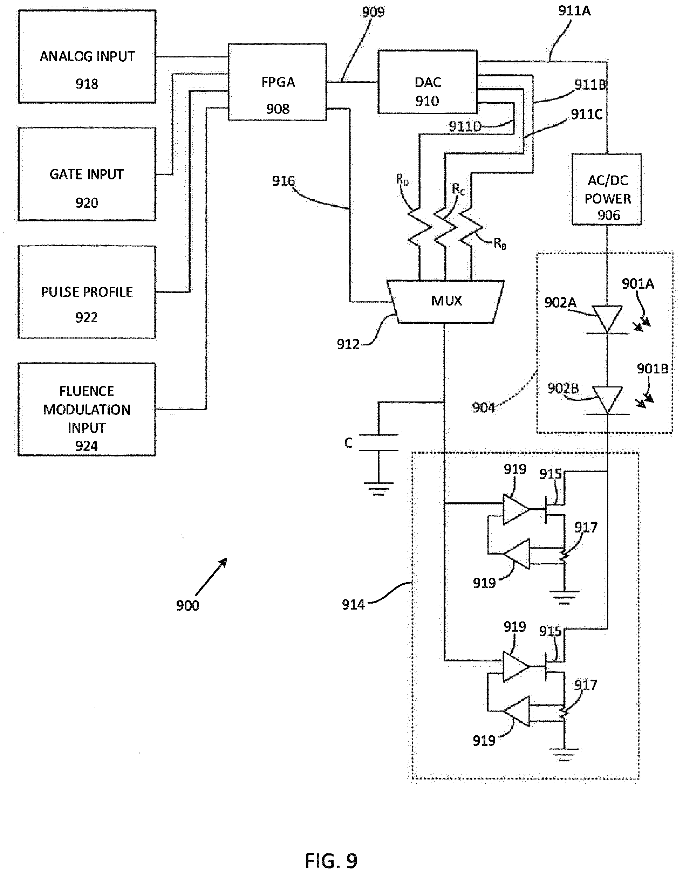

FIG. 9 shows a laser pump control system 900 that controls the optical outputs 901A, 901B of one or more pump diodes 902A, 902B (typically several) situated in series in one or more pump modules 904. The optical outputs 901A, 901B can be used to directly produce a laser system processing beam in a laser system, such as in so-called direct-diode laser systems, or to pump other gain media to produce a laser system processing beam (e.g., fiber lasers, solid state lasers, disk lasers, etc.). An AC/DC power supply 906 provides a current to the pump diodes 902A, 902B in order to produce the optical outputs 901A, 901B. An FPGA 908, or other similar controller device (e.g., PLC, PLD, CPLD, PAL, ASIC, etc.), is situated to produce a digital output 909 to a DAC 910 that corresponds to a desired pump current for the pump diodes 902A, 902B so as to generate the corresponding pump diode optical outputs 901A, 901B. The DAC 910 converts the digital output from the FPGA into a DAC output 911A having a corresponding voltage and that is received by the AC/DC power supply 906 to generate the pump current.

A plurality of additional DAC outputs, 911B-91 ID, are coupled to a signal multiplexer 912 situated to select the rise time and fall time of the pump current received by the pump diodes 902A, 902B. The signal multiplexer 912 is coupled to an RC circuit capacitor C and one or more current control circuits 914 situated to control the pump current that generates the optical outputs 901A, 901B from the pump diodes 902A, 902B. For example, a resistor R_{B} coupled to DAC output 911B can be associated with a longer pump current rise time for the pump diodes 902A, 902B, a resistor Rc can be associated with a shorter pump current rise time, and resistor R_{D} can be associated with a suitable pump current fall time. Rise times and fall times are typically asymmetric in the pump diodes 902A, 902B so that having different selectable resistance values associated with rise and fall and produce an improved response, such as a shorter rise time and fall time with a constrained overshoot or undershoot. In some examples, adjustable resistors are used, such as digipots, so as to allow a tunable resistance value that can also vary with a digital modulation and produce improved rise time, fall time, overshoot, and undershoot optical response characteristics. A serial bus 916 can communicate a digital modulation command from the FPGA 908 to the multiplexer 912 so as to switch between different rise times and fall times and to digitally modulate the pump current.

The current control circuits 914 can include one or more FETs 915 coupled to current sensing resistors 917, and one or more operational amplifiers 919 that provide control feedback and receive current setpoints from the FPGA 908. Including a plurality of the current control circuits 914 in parallel can spread and dissipate heat across the respective FETs 915 of the current control circuits 917 so as to improve current control precision and reliability. In typical examples, the pump diode 902A has a different forward voltage than the pump diode 902B. Thus, the voltage drop across a FET will vary between pump diode series. The AC/DC power supply 906 can be situated to maintain a suitable FET voltage that corresponds to a constant or consistent heat dissipation. The associated electronic efficiency and reliability of the current control circuits 914 is improved as heat dissipation across the FETs 915 is partitioned and limited. Furthermore, the current control response characteristics of the current control circuits 917 that contribute to the overall response time of the optical outputs 901A, 901B of the pump diodes 902A, 902B are improved, allowing shorter rise times and fall times associated with the resistors R_{B}, R_{C}, R_{D}, and higher digital modulation frequencies. The apportioning of current with the parallel current control circuits 914 also allows selection of current sensor resistor values for the current sensing resistors 917 that are more accurate, further improving response characteristics of the current control circuits 914 and optical outputs 901A, 901B. With fast sample rates from the DAC 910, and with the improved response characteristics of the current control circuits 914, laser diode current can be switched or varied rapidly. In some examples, rise times and fall times for the optical outputs 901A, 901B of less than or equal to 50 µs, 20 µs, 10 µs, 5 µs, or 2.5 µs are achieved, including with short modulations periods, such as less than 100 µs, 50 µs, 20 µs, 10 µs, or 5 µs.

In some embodiments, the FPGA 908 receives an analog signal from an analog input 918 from an external source that has been passed through a signal conditioner and ADC (not shown) The external source, such as an automated system, computer, computer memory or data file, manual control, graphical user interface input, etc., is configured to provide the analog signal based on a desired a laser system power level. The laser system can then be pumped by the optical outputs 901A, 901B in order to achieve the desired laser system power level. The FPGA 908 can also receive a gate signal from a gate input 920 that can be associated with the analog signal and the external source providing the analog signal. The gate signal is typically digital and can be configured to provide on and off commands for the pump diodes 902A, 902B so as to turn a corresponding laser system beam on and off. The gate signal and analog signal can also be used to produce an arbitrary waveform for the optical outputs 901A, 901B. In typical examples, the analog signal and the gate signal are coordinated so that a laser system beam is scanned across a target to selectively heat and process material of the target at different power levels and at different locations of the target. A pulse profile from a pulse profile signal input 922 can also be coupled to the FPGA 908 so as to provide an external source to select various features of the laser system beam generated from the pump diodes 902A, 902B. The pulse profile information can be stored in a memory locally or remotely or provided as a signal from an external source. For example, different rise times and fall times can be selected for the pump currents, along with laser system beam repetition rates, power levels, etc.

A fluence modulation signal is received from a fluence modulation input 924 that is also coupled to the FPGA 908 and which can also be coordinated with the analog signal, gate signal, and pulse profile, or it can be separate. The fluence modulation signal can be provided to correct for a fluence deviation associated with the laser system beam being delivered to the target. For example, the analog input may have a limited bandwidth, for example, due to the increased noise typically associated with high frequency analog signals, or the bandwidth may be unsuitable in relation to the dynamics of other laser system components, such as a scanner, or the laser process being performed. The fluence modulation signal can be used to compensate for the bandwidth-limited analog signal or corresponding bandwidth-limited laser system performance by digitally modulating the pump currents in order to achieve a desired fluence at the target during laser processing with the laser system beam produced with the optical outputs 901A, 901B. For example, when a scanning speed decreases, the fluence modulation signal can be received by the FPGA 908 and the FPGA 908 can direct the multiplexer 912 over the serial bus 916 to modulate so as to produce the desired fluence correction at the target.

### Modulation Example

In some examples, laser beams are directed to targets to selectively melt and fuse metal powder in a powder-bed so as to construct three dimensional objects with successive layers of the selectively melted and fused powder. During the selective melting process, dynamic variation in matter phases can produce unstable material behavior including random ejection of material globules and particulate clumps. Various techniques herein can be used to identify and control matter phase variation to reduce material ejection and to improve object characteristics, such as alloy composition, grain geometry, surface texture, and mechanical response, such as strength and elasticity.

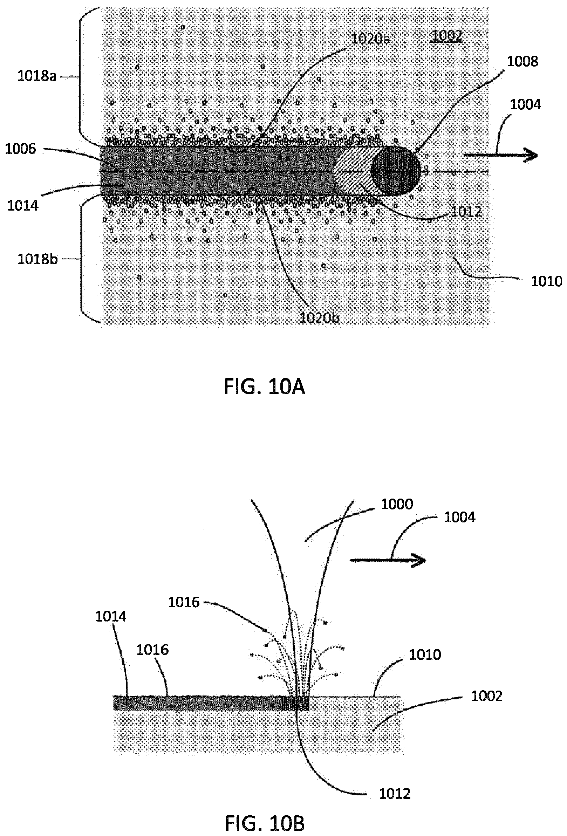

In one example depicted in FIGS. 10A-10B, a laser beam 1000 is directed at a target 1002 that includes metal powder such as one or more of powdered aluminum, iron, carbon, chromium, tin, or other elements associated with selective melting. The laser beam 1002 moves in a scan direction 1004 along a scan path 1006 and forms a circular spot 1008 at a focus at or near a surface 1010 of the target 1002. The edge of the spot 1008 can be defined based on 1/e, 1/e², full-width half-maximum, etc., as convenient, and need not depict a zero intensity value. Other spot geometries can be used, including square, rectangular, elliptical, etc., and various intensity profiles are achieved based on the type of laser source and beam shaping optics used, including Gaussian, super-Gaussian, top-hat, lobed, symmetric, asymmetric, masked, etc. The size of the spot 1008 can be chosen as needed based on available brightness of the laser source and working distance between the target 1002 and focusing optics. Average continuous-wave powers of the laser beam 1002 can be selected based on various material characteristics, including melting points and latent heat enthalpies, and various environmental characteristics, such as ambient temperature and pressure.

As the laser beam 1002 is traverses along the scan path 1006, a melt pool 1012 is created at the spot 1008 and can remain for a short duration after the laser beam 1002 has scanned to a new position relative to the surface 1010. A fused portion 1014 is formed that corresponds to the selectively melted and fused object, after the melt pool 1012 cools and solidifies. During selective melting, the large optical intensities of laser beam 1002 at the spot 1008 can be sufficient to boil powder material and form plasma. The melt pool 1012 can fuse to form solid material and can be commixed with boiling gas phase powder and powder in a plasma state, resulting in instabilities associated with the melt pool 1012 and in ejected globules 1016 of powder material in various matter phases.

In some examples, ejecta patterns 1018a, 1018b of the ejected globules 1016 are formed that can have observable characteristics, such as an average globule diameter and a radially dependent ejecta density. In further examples, the melt pool 1012 and the ejected globules 1016 can have detectable optical characteristics, including emissive, transmissive, reflective, spectral, and scattering characteristics. In additional examples, one or more powder characteristics, such as a vapor pressure, can be associated with one or more characteristics of the melt pool 1012 and ejected globules 1016, and the powder characteristics can be determined and varied with a controlled modulation of characteristics of the laser beam 1002 so that detrimental aspects of the selective melting process, such as the formation of the ejecta patterns 1018a, 1018b, can be attenuated. Modulation of the laser beam can also be applied and varied based on detected characteristics of the ejecta patterns 1018a, 1018b, melt pool 1012, or ejected globules 1016. For convenience, the fused portion 1014 is shown with edges 1020a, 1020b that correspond to edges of the spot 1008 that traverses the scan path 1006. In various examples, the edges 1020a, 1020b can be spaced apart from the spot 1008.

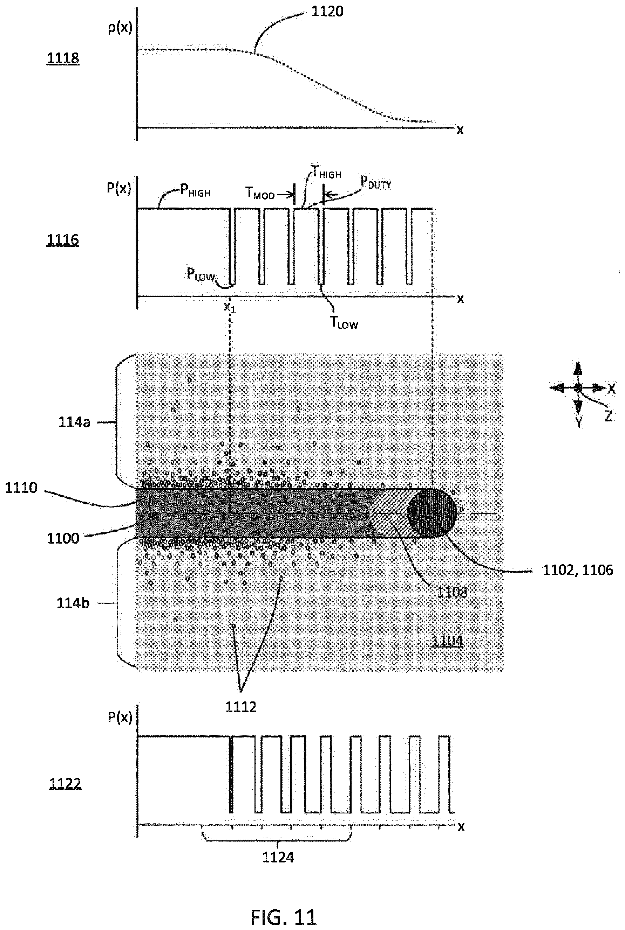

FIG. 11 shows a scan path 1100 of a laser beam 1102 moving to the right in the plane of FIG. 11 across a selective laser melting target 1104 (and/or alternatively with the target 1104 moving to the left). The laser beam 1102 forms a spot 1106 that melts metal powder material of the target 1104 and forms a melt pool 1108 larger than the spot 1106 as the laser beam 1102 is scanned. A fused portion 1110 is formed as the melt pool 1108 cools and during the melting and fusing process, liquid powder splatters and ejects from the target 1104 to form ejecta deposits 1112 in the form of ejecta patterns 1114a, 1114b. Above the plan view of the scan path 1100 is a graph 1116 of power of the laser beam 1102 as it propagates in the x-direction at a constant scan rate. At a position x₁ (or corresponding time), the power of the laser beam 1102 begins to modulate between two powers P_{HIGH}, P_{LOW} according to a modulation period T_{MOD} that has a selected duty cycle P_{DUTY} defining a portion T_{HIGH} of the modulation period T_{MOD} in which the power of the laser beam is at P_{HIGH} and a portion T_{LOW} in which the power is at P_{LOW}. Also shown above the plan view is a graph 1118 that shows an average density 1120 of the ejecta pattern 1114a along the scan path 1100. As shown in the plan view and the graph 1116, after the constant power of the laser beam 1102 changes to a modulated power, the ejecta patterns 1114a, 1114b decrease in density and are reduced or eliminated. Thus, by introducing a controlled modulation of the power of the laser beam 1102, ejecta deposits can be reduced and uniformity and other characteristics of the fused portion 1110 can be improved. In some examples, controlled modulations and associated variations of P_{HIGH}, P_{LOW}, P_{DUTY}, T_{MOD}, etc., can be based on predetermined response characteristics and can be introduced without a dynamic detection, e.g., according to a beam scanning dynamics, or can be based on detected characteristics of the laser melting target 1104, spot 1106, melt pool 1108, scan movement, etc.

In typical examples, the modulation period T_{MOD} has a duration selected so that a portion of the spot 1106 is situated over an area of the target 1104 equal to the spot area over multiple adjacent modulation periods. For example, for a laser beam having a 100 µm diameter spot that is scanned at 1 m/s, five modulation periods with a T_{MOD} of 20 µs will overlie some portion of the target area. Laser beam parameters can be selected based on material processing requirements, which can vary from material to material, and which can be dependent on laser system type. Representative processes and system examples provide laser beams for material processing applications in which a normalized energy or fluence delivery is desirable, but rapid laser beam scanning does not permit uniform energy delivery along various portion of the laser beam scan path, such as the scan path 1100, due to a desired slope of power delivery over time exceeding the typical power adjustment capabilities of laser systems. In some continuous-wave laser examples herein, modulation periods as short as 5 µs can be obtained with related laser beam power rise times and fall times as low as 2.5 µs. In typical examples, modulation periods can include 10 µs, 50 µs, 100 µs, 500 µs, 1 ms, or longer, and rise times and fall times can include 5 µs, 10 µs, 20 µs, 50 µs, 100 µs, or longer. Duty cycles can also be varied, such as shown in graph 1122, according to process requirements so as to adjust laser modulation and average beam power based on metal powder type, desired material properties of the selectively fused materials (e.g., sintered or melted material), and laser system parameters that affect process characteristics, such as laser beam spot size, laser beam intensity profile, laser beam scan rate, laser scan system dynamics, etc. Graph 1122 shows a particular example with a constant T_{MOD} and a variable P_{DUTY} that increases from 0% to greater than 50% over a series of cycles 1124. According to different examples, the variation of P_{DUTY} can be provided in a step, ramp, or other functions, including based on feedback or without feedback. In some examples, PDUTY can be varied by providing a selected T_{LOW} or T_{HIGH} and increasing or decreasing T_{MOD}. In some examples, the beam modulation can be provided for a single modulation cycle. The modulation period T_{MOD} and/or duty factor can also vary or be adjusted during processing based on scan path characteristics, scanning system dynamics, to maintain a constant or uniform fluence or energy absorbed by the material or vary a fluence or energy absorbed by the material at the target 1104, or based on detected characteristics of the target 1104, melt pool 1108, ejected material, and ejecta deposits 1112 (including ejecta patterns 1114a, 1114b), or the like or any combinations thereof.

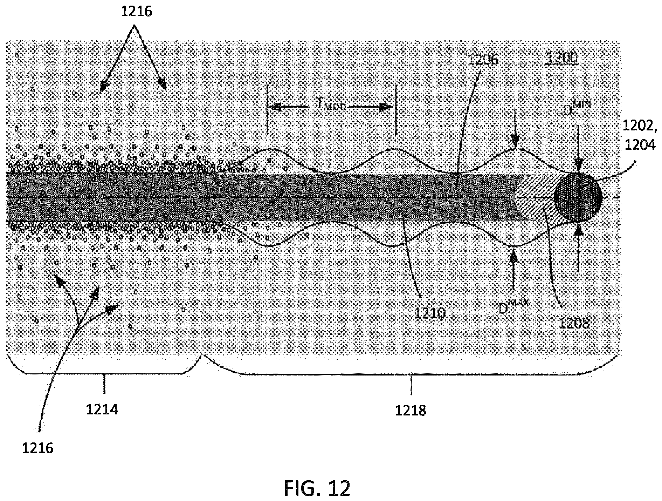

FIG. 12 shows the processing of a metal powder target 1200 with a laser beam 1202 that forms a laser spot 1204 at the target 1200 and that is directed along a scan path 1206. The laser spot 1204 selectively melts a portion of the target 1206 to form a liquid portion 1208 that cools into a fused portion 1210. As shown, the laser spot 1204 has a constant laser beam power and is scanned at a constant scan speed in a direction to the right in the plane of FIG. 12. A constant separation distance extends between edge traces 1212a, 1212b of the laser spot 1204 along a first scan path portion 1214. During processing, instabilities in the matter phase changes of the metal powder as the target 1200 is heated by the laser spot 1204 results in the ejection of material that can form an ejecta pattern 1216 adjacent to and/or within the fused portion 1210 and that can be associated with various deleterious effects, including substandard material properties of the fused portion 1210 and agglomeration and fineness inconsistency of the source powder of the target 1200.

Along a second scan path portion 1218, the laser spot 1204 undergoes an area modulation as shown by the variable separation distance between the edge traces 1212a, 1212b. The separation distance can vary between minimum and maximum widths D_{MIN} and D_{MAX} according to a spatial modulation period T_{MOD} that corresponds to a beam area modulation frequency and the scan speed of the laser spot 1204 relative to the target 1200. The modulation of the beam area and corresponding beam area modulation frequency can be provided with a beam expander, focus adjuster, or other optical component that may be optically coupled to the laser beam 1202 and situated to adjust beam shape. For clarity, the T_{MOD} depicted in FIG. 12 has a length that is on the order of a minimum diameter D_{MIN} of the laser spot 1204 or the width of the fused portion 1210. In other examples, the T_{MOD} can be 100, 10, 1, 1/5, 1/10, 1/50, 1/100 of D_{MIN} or the fused portion 1210 or smaller. In some examples, the beam area modulation frequency or the spatial modulation period T_{MOD}, or both, can be adjusted based on material response properties of the powder material of the target 1200, the liquid portion 1208, ejected material, or other associated features or properties, including the ejecta pattern 1216, vapor pressure of the metal powder, detected or inferred optical characteristics, temperatures, thermal relaxation times, cooling rates, etc. After the laser spot 1204 undergoes modulation in the second scan path portion 1218, the density of the ejecta pattern 1216 decreases, resulting in improved material properties of the fused portion 1210.

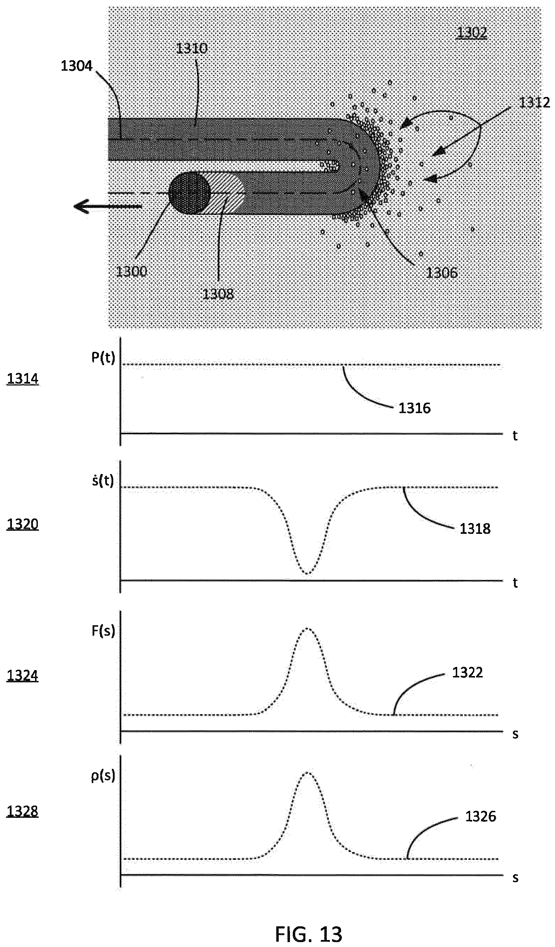

In FIG. 13, a laser spot 1300 is directed at a selective laser melting target 1302 along a scan path 1304 that includes a bend region 1306. During the scanning and processing of the target 1302, a melt pool 1308 is formed from powder material of the target 1302 that subsequently solidifies to form a solid region 1310. The laser spot 1300 can be directed along the scan path 1304 at a constant power, as shown in graph 1314 with power curve 1316, with a scanning system that includes one or more scan mirrors, actuators, or other optical components, that have a characteristic dynamic response. In some examples, even with a constant scan speed command the dynamic response associated with the directional change of the laser spot 1300 in the bend region 1306 can be associated with a decrease in scan speed, as shown with scan speed s(t) curve 1318 in graph 1320, and fluence increase at the target 1302, as shown with fluence F(s) curve 1322 in graph 1324. In the bend region 1306, the increase in fluence can result in excessive heating and matter phase instabilities, including an increase in vapor pressure associated with the metal powder in one or more matter phases. Liquid or plasma phase powder material can eject from the melt pool 1308 in the bend region 1306 resulting in an ejecta pattern 1312 formed along the scan path 1304, as shown with ejecta density p(s) curve 1326 in graph 1328. In further examples, proximity of the segments of the scan path 1304 entering and departing the bend region 1306 can also be associated with an increased thermal load in the vicinity of the bend region 1306 and entering and departing scan path segments that produces a localized increase in vapor pressure and associated matter phase instabilities.

In some embodiments herein, vapor pressures can be approximated or measured based on optical detection of characteristics of the melt pool 1308 or characteristics proximate the melt pool 1308. For example, one or more optical detectors can be coupled to the laser spot 1300, e.g., in view of the selective laser melting target 1302, or through the laser scanner scanning the laser spot 1300 along the scan path 1304. Vapor pressure monitoring apparatus can be situated to receive optical detection signals from the one or more optical detectors and convert the detected optical signals to vapor pressure measurements. Some embodiments can include optical pyrometers situated to determine a melt pool temperature, such as through the Stefan-Boltzmann thermal radiation relation, and vapor pressure approximations can be obtained through approximations of the Clausius-Clapeyron relation between matter phases. In typical examples, other parameters may be detected or approximated, such as a local temperature, target temperature, ambient pressure, etc., and may be used with the optical detection signals to produce vapor pressure measurements. In some examples, the vapor pressure monitoring apparatus can be coupled to or part of a laser controller that controls generation and/or movement of the laser spot 1300 along the scan path 1304. Vapor pressure measurements can be stored for recording purposes and related to fabricated parts, such as part serial numbers, powder material lots, etc. Trends in part failures or part testing outcomes can be associated with vapor pressure measurements and/or variations. During processing or in subsequent processing, vapor pressure monitoring can detect trends or variations in relation to predetermined thresholds, and corrective modulations can be applied to counteract trends.

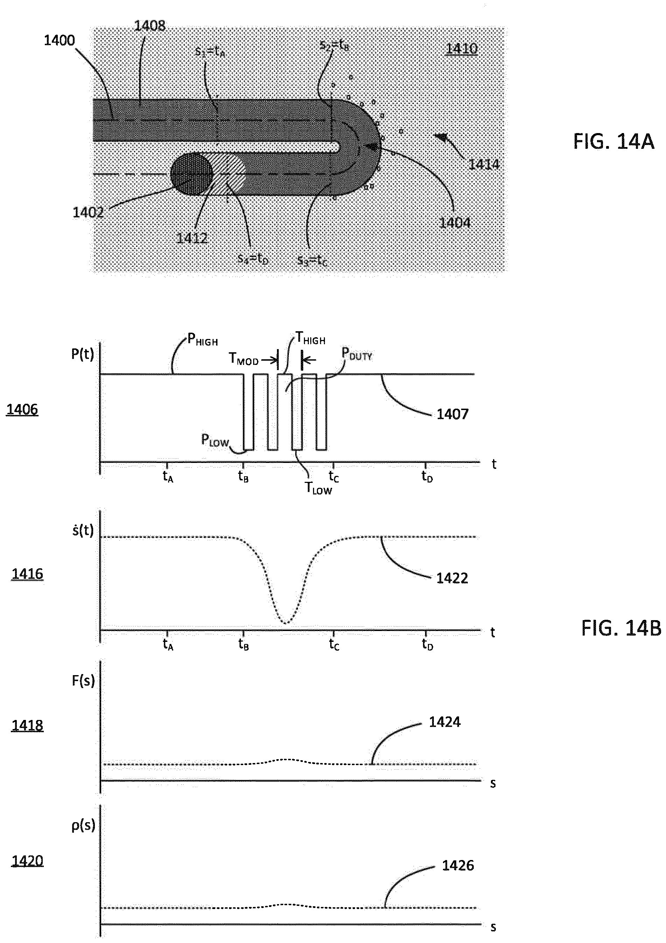

FIG. 14A shows a scan path 1400 of a laser spot 1402 that includes a bend region 1404, similar to the scan path 1304 and bend region 1306 shown in FIG. 13. FIG. 14B shows a graph 1406 of power with respect to time P(t) curve 1407 associated with the laser spot 1402 and scan path 1400, and related graphs 1416, 1418, 1420 showing respective scan speed s(t) curve 1422, fluence F(s) curve 1424, and ejecta density p(s) curve 1426. A fused region 1408 is formed along the scan path 1400 of powder material of a selective laser melting target 1410 in the wake of the laser spot 1402 and associated melt pool 1412. At a time t_{A}, corresponding to a scan path position s₁, the laser spot 1402 is being scanned to the right in the plane of FIG. 14A at a selected scan speed. At a time t_{B}, corresponding to a scan path position s₂, the laser spot 1402 scan speed slows so as to change scan direction, scanning through the bend region 1306 and reversing scan direction. At a time tc, corresponding to a scan path position s₃, the laser spot 1402 accelerates back to the scan speed at the time t_{A} in a scan direction to the left in the plane of FIG. 14A and achieves the former scan speed at a time t_{D}, corresponding to a scan position s₄.

To reduce matter phase instabilities associated with the bend region 1404, the power of the laser spot 1402 is modulated between power levels P_{HIGH} and P_{LOW} according to a modulation period T_{MOD} with a selected duty cycle P_{DUTY}, in or near the bend region 1404, e.g., between the times t_{B} and tc. The modulation reduces an average power of the laser spot 1402 so that a more uniform amount of energy is delivered to the processing area of the laser melting target 1410, as shown with the fluence F(s) curve 1424. With energy delivery normalized with respect to scan movement, an ejecta pattern 1414 that is formed, as also depicted with related ejecta density p(s) curve 1426, is smaller and contains fewer ejected particulates as compared to the ejecta pattern 1312 shown in FIG. 13. Modulation periods T_{MOD} of various lengths and duty cycles P_{DUTY} having various percentages at one or more high powers can be used, including variable modulation periods T_{MOD} and variable duty cycles P_{DUTY}. Modulation can be applied based on predetermined characteristics of the scan path 1400 as well as based on detected characteristics at or near the laser spot 1402, including the target 1410, fused region 1408, melt pool 1412, ejecta pattern 1414, ejected particulates, scan path 1400, etc. In some examples, the laser spot 1402 is modulated between alternating power levels along the scan path 1400 before or after the bend region 1404 or times t_{B} and t_{C} but at an increased duty cycle P_{DUTY} or modulation period T_{MOD} (or both). In some examples, power rise times and fall times associated can change an average of the laser spot 1402 with variation of the modulation period T_{MOD}.

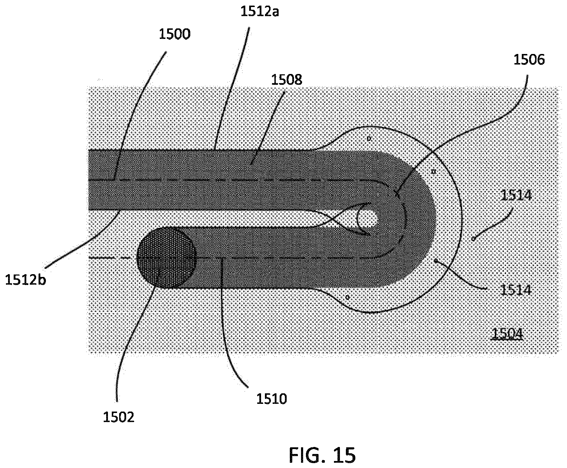

FIG. 15 shows an example of a scan path 1500 of a laser spot 1502 that is scanned across a selective laser melting target 1504 with the scan path 1500 including a bend region 1506. A fused region 1508 is formed with a constant width in the wake of the laser spot 1502 and associated liquid melt region 1510 that trails the laser spot 1502. Opposing edge traces 1512a, 1512b of the scanned laser spot 1502 align with or are spaced apart by a first distance from the fused region 1508 during straight portions of the scan path 1500 and diverge away from the fused region 1508 in the bend region 1506. To decrease instabilities associated with mixed matter phases of the liquid melt region 1510 as the laser spot 1502 scans through the bend region 1506, a size of the laser spot 1502 is increased through at least a portion of the bend region 1506 and adjacent to the bend region 1506. With a decrease in instabilities, fewer powder particulates 1514 are ejected during formation of the fused region 1508 in the bend region 1506 as compared with the similar bend region 1306 shown in FIG. 13.

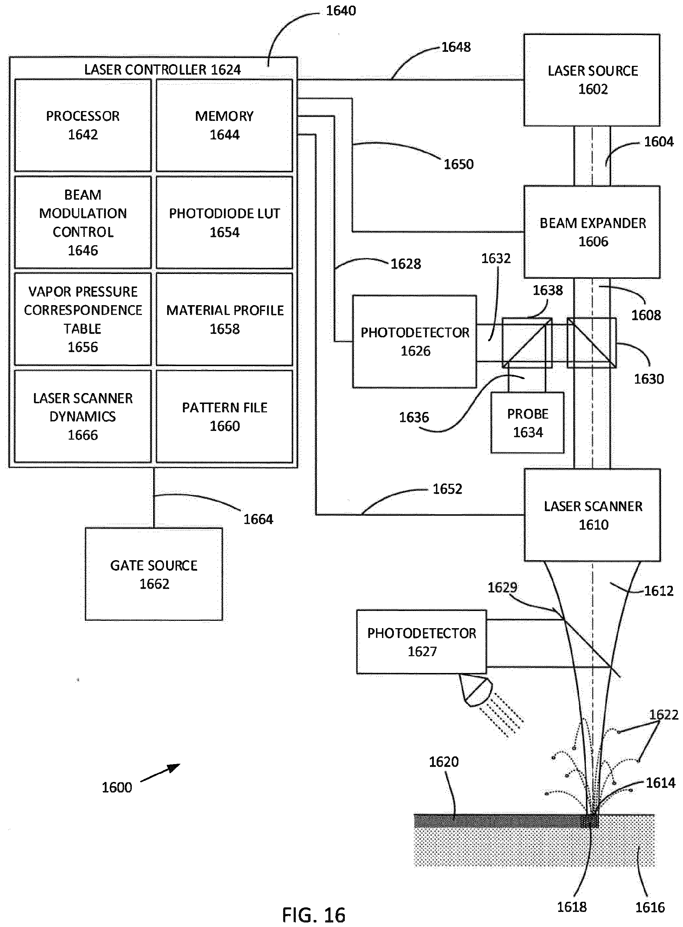

In FIG. 16, a schematic of a laser system 1600 is shown that is suitable for use in selective laser melting processes. The laser system 1600 includes a laser source 1602 situated to generate a laser beam 1604, a beam expander 1606 situated to receive the laser beam 1604 and vary a beam size and produce an expanded laser beam 1608, and a laser scanner 1610 situated to receive the expanded laser beam 1608 and form a focused beam 1612 that is focused to a beam spot 1614 and directed along a laser scan path in a selected region of a selective laser melting target 1616. As the beam spot 1614 heats the target 1616, metal powder melts to form a melt pool 1618 that cools to form a fused material 1620. The metal powder can boil and eject from the melt pool 1618 in the form of particles of ejecta 1622 forming various splatter patterns and can be associated with formation of the fused region 1620 with subnominal material properties and characteristics. During selective laser melting, successive layers of material that are selectively melted over the fused region 1620 can weaken or degrade the overall quality of the multiple layers comprising the object.

A laser system controller 1624 is coupled to the laser source 1602 and controls the generation of the laser beam 1604 and is further coupled to the beam expander 1606 to control the degree of expansion of the expanded laser beam 1608. The laser system controller 1624 is also coupled to the laser scanner 1610 so as to control the focus and position of the focused beam 1612 at the target 1616. The laser system controller 1624 can also be coupled to a photodetector 1626 so as to receive a photodetector signal 1628. The photodetector 1626 is optically coupled to the target 1616 proximate the beam spot 1614 so as to monitor one or more optical characteristics of the selective laser melting process. For example, a beam pickoff such as a beam splitter 1630 can be situated in the propagation path of the expanded laser beam 1608 so that an optical flux 1632 coming from or near the position of the beam spot 1614 during processing can propagate through the optics of laser scanner 1610 and reflect at the beam splitter 1630 to become directed to the photodetector 1626. The photodetector 1626 can be of various types, including one or more of a photodiode, pyrometer, infrared thermometer, thermographic camera, and can also be optically coupled directly to the surface of the target 1616 and beam spot 1614 instead of through optics of the laser scanner 1610. For example, a photodetector 1627 can directly view the target surface or can be coupled to the beam path with a beam splitter 1629.

In some examples, the photodetector signal 1628 corresponds to a temperature of a portion of the target 1616, such as the melt pool 1618 and ejecta 1622. In additional embodiments, the photodetector signal 1628 corresponds to a reflection, emission, spectral, scattering, or other optical power signature of the melt pool 1618 or ejecta 1622, including direct imaging of the target 1616 at or near the beam spot 1614. In further examples, a probe source 1634 is situated to emit a probe beam 1636 that can be directed to the target 1616, e.g., through a beam splitter 1638. The probe beam 1636 can optically interact with the melt pool 1618 or ejecta 1622, e.g., through absorption, reflection, transmission, diffraction, scattering, etc., to produce the optical flux 1632 received by the photodetector 1626 and converted to the photodetector signal 1628. In representative examples, the optical flux 1632 that is detected includes one or more spectral components offset from a wavelength of the laser beam 1604.

The laser system controller 1624 includes a computing environment 1640 having one or more processors 1642 and memories 1644. In some examples, the processor 1642 can be configured based on reduced or complex instruction set computing architectures, and can include one or more general purpose central processing units, application specific integrated circuits, graphics or co-processing units or other processing units. The memory 1644 can be volatile memory (e.g., registers, cache, RAM), non-volatile memory (e.g., ROM, EEPROM, flash memory, etc.), or a combination of volatile and non-volatile memory. The memory 1644 is generally accessible by the processor 1642 and can store software in the form computer-executable instructions that can be executed by the processor 1642 coupled to the memory 1644. The memory 1644 can also include removable or non-removable storage including magnetic media, CD-ROMS, DVDs, or any other medium that can be used to store information in a non-transitory way and which can be accessed within the computing environment 1640.

In typical examples, the memory 1644 can store instructions, data arrays, lookup tables, etc., implementing one or more method steps and algorithms described herein. For example, the laser system controller 1624 can include a beam modulation control 1646 situated to initiate or adjust a power level modulation of the laser beam 1604 through a laser command signal 1648 coupled to one or more components of the laser system 1600, including the laser source 1602, beam expander 1606, and laser scanner 1610. In representative embodiments, the beam modulation control 1646 can vary a beam modulation period, beam modulation duty cycle, and beam modulation power level, in discrete fashion between alternate high and low power levels, based on the received photodetector signal 1628 to produce a predetermined change in an average power of the generated laser beam 1604. For example, the beam modulation control 1646 can provide various modulations in response to the photodetector signal 1628 exceeding a predetermined threshold associated with matter phase instabilities, ejecta, vapor pressure, or other features, so as to reduce the photodetector signal 1628 below the threshold. Further examples can provide analog variation of power level. In discrete examples, alternation between more than two power levels is possible, including in various modulation sequences (e.g., P₁-P₂-P₃, P₁-P₂-P₃-P₂-P₁, P₂-P₁-P₃-P₁-P₂, etc.) and with non-equal period durations. Low power levels can correspond to a zero or non-zero power. In additional embodiments, the beam modulation control 1646 modulates the area of the beam spot 1614 through a beam expander modulation signal 1650 to reduce a power density at the melt pool 1618 based on the variation in beam area and to bring the photodetector signal 1628 below the predetermined threshold. In further embodiments, the beam modulation control 1646 modulates the beam area at the target 1616 with a focus adjust signal portion of a laser scanner command signal 1652 that is sent to the laser scanner 1610.

In some examples, a photodiode lookup table 1654 can be used to relate values of the photodetector signal 1628 with modulation amounts for the beam modulation control 1646. In further examples, a vapor pressure correspondence table 1656 is provided that relates the photodetector signal 1628 to vapor pressure quantities or equations corresponding to the metal powder at or near the melt pool 1618. Modulation rates of the beam modulation control 1646 can be adjusted based on vapor pressures determined from the photodetector signal 1628 and vapor pressure correspondence table 1656. The laser system controller 1624 can also include a selectable material profile 1658 associated with the material composition, powder size, or other features of the target 1616. Some embodiments can include a pattern file 1660 that provides pattern information for the scanning of the beam spot 1614, and a gate source 1662 that can provide a gate command signal 1664 allowing the laser source 1602 to energize and deenergize.

The laser controller 1624 can include laser scanner dynamics 1666 that describe the laser scanner 1610 with one or more equations, parameters, or data tables. During scanning, beam spot acceleration and deceleration, such as with directional changes, arcs, circles, etc., can vary the amount of fluence delivered to the target 1616, and a proximity between adjacent scan path segments, e.g., before and after a scan direction change, during the formation of a small feature, etc., can locally increase thermal load and produce dynamic variation in the temperature of the melt pool 1618. For a given scan path defined by the pattern file 1660, modulations provided by the beam modulation control 1646 can be adjusted based on the scan path characteristics and laser scanner dynamics 1666 so that a fluence remains within a process threshold associated with the formation of the fused region 1620 and matter phase instabilities are inhibited.

In some embodiments, the beam modulation control 1646 is determined without the photodetector signal 1628, photodetector 1426, or an associated in situ or contemporaneous detection of optical characteristics of the target 1616. For example, a metal powder material can be selected and tested to determine various fusion, melt-pool, vapor pressure, ejecta, instability thresholds, or other laser response characteristics (e.g., scan speed, beam size, beam shape, peak power, average power, etc.), and various laser modulations can be provided to determine modulations suitable for processing. The determined modulation parameters associated with the selected metal powder or other process parameters, such as laser and fused object characteristics, including width, depth, feature size, grain size, etc., can be included in the material profile 1658. Different laser material process parameters can be selected for use with different metal powders or for different portions of the same object.

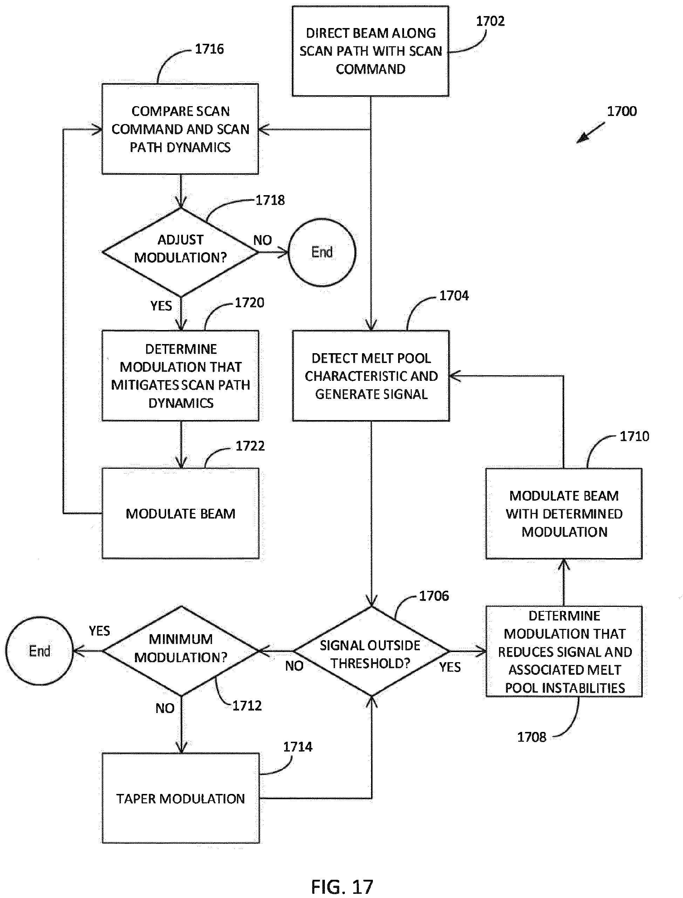

FIG. 17 shows a method 1700 of adjusting a beam modulation to produce improved laser processing results in selective laser melting targets. At 1702, a beam generated with a laser source is directed along a scan path to a target according to a laser scanning command. The beam typically forms a focused spot having an average power selected such that metal powder of the target undergoes melting and fusion. In representative examples, a melt pool is formed at the beam spot and in the wake of the beam spot as the beam traverses the scan path. A photodetector is optically coupled to the target and scan path so that, at 1704, an optical characteristic of the melt pool or the target in proximity to the melt pool is detected and a corresponding signal is generated.

At 1706, a laser controller receives the photodetector signal and compares the signal to one or more signal thresholds associated with a characteristic of the target, such as a melt pool temperature, vapor pressure, ejected powder material, plasma formation, etc., that can correlate with melt pool instabilities, and undesirable fusion or target characteristics. For signals that fail the threshold condition, at 1708, a laser beam modulation is determined that reduces (or increases, depending on the detected characteristic) the signal and associated melt pool instabilities. In representative embodiments, beam modulations selected in response to the signal can include an alternating between two or more beam powers with one or more periods, duty cycles, and power levels that correspond to a reduction in average beam power at the target. In some examples, beam modulation can include an analog variation in beam power. In further examples, a beam area or beam focus is varied so as to vary the average power of the beam at the target.

In some examples, based on response times for the photodetector and the generation and termination of the laser beam by the laser system, modulations can be provided to at least a portion of a melt pool existing at the time of detection. At 1710, the laser beam is modulated with the determined modulation, and the melt pool and target undergo repeat or continued detection at 1704. For signals within the threshold, a minimum modulation condition can be checked at 1712 so that if the modulation is not a minimum level, the modulation can be tapered at 1714. Additional checks of the signal at 1706 can allow the modulation to continue to taper to a minimum or predetermined level, including zero modulation or non-zero modulation. In some examples, the signal condition can be outside of threshold and the requested modulation produces an average power that is outside a predetermined material process window.

As the beam is directed along the scan path, at 1716, the scan command or scan path are compared to dynamics of the scan path, typically associated with scanner mirrors and mirror actuators that provide the direction of the laser beam along the scan path. Scan path dynamics can produce a fluence variation at the target resulting in an out of tolerance fluence for the corresponding laser process, such as through overheating. Based on the comparison at 1716, a determination at 1718 can be made whether to adjust a beam modulation. For modulation adjustments, at 1720, the laser controller determines a beam modulation that mitigates the fluence variation associated with scan movement of the beam. For example, a slowing beam with a predetermined constant continuous-wave power or average power can increase an optical flux delivered to an area of the target and produce unsatisfactory laser processed materials. At 1722, the beam is modulated based on the modulation determined at 1720 so as to reduce the fluence variation. The process of comparing the scan command at 1716 can be repeated so that the modulation of the beam can continue to be adjusted based on scan dynamics. In some examples, modulations applied at 1708, 1714, 1722 can be compared to determine priority of application. For example, a modulation applied based on scan dynamics can correspond to the minimum modulation at 1712 and modulations considered at 1712, 1718 can be compared before a determination is made.

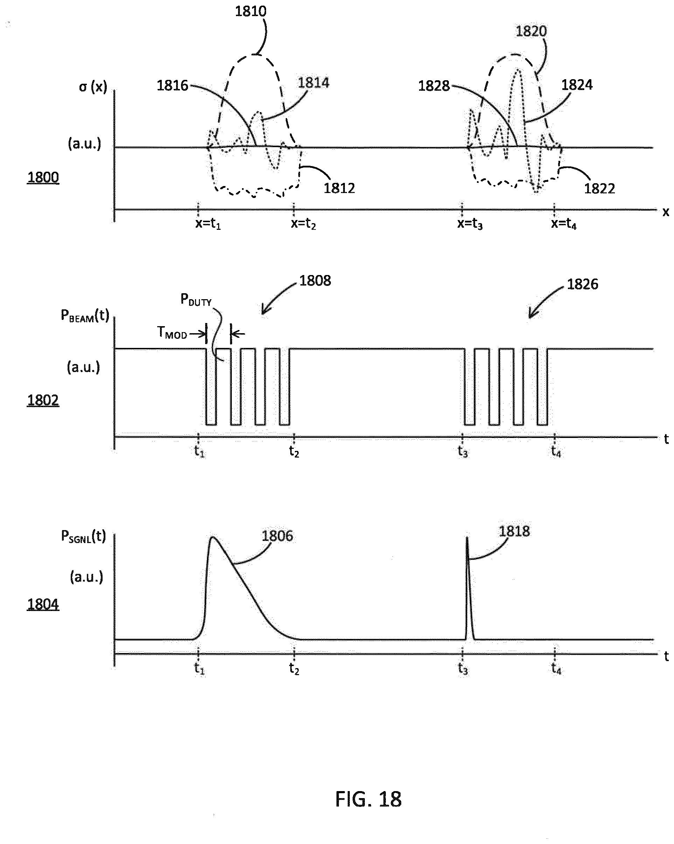

FIG. 18 shows graphs 1800, 1802, 1804 illustrating a selective melting laser process. The graph 1800 tracks a characteristic σ(x) of the target that is selectively melted, such as a characteristic of the melt pool, fused region, or metal powder. Examples can include an ejecta density, fusion strength, grain size, fused region geometry (e.g., width, depth), etc. The graph 1802 shows a power level P_{BEAM} of the laser beam generated and directed to the target to perform the selective melting of the metal powder of the target. The graph 1804 shows a signal level P_{SGNL} of a photodetector signal, or signal associated with a photodetector signal, that is received from the target at or near the beam-target interface, such as the melt pool, fused region, or metal powder. At a time t₁, P_{SGNL} increases, shown as signal hump 1806, due to random perturbations in the beam-powder interaction that can be associated, for example, with matter phase instabilities in the melt pool. P_{SGNL} can correspond to temperature, vapor pressure, optical scattering, optical ejecta signatures such as Doppler characteristics associated with the movement of the ejecta, scattering, ejecta patterns, pattern densities, spectral characteristics such as emission or spectral line ratios associated with plasma excitation or other matter phase irregularities, direct imaging and image variation indicative of matter phase instabilities, reflective and absorptive variations, etc.

In response to the increase in P_{SGNL}, a laser controller controlling the laser beam generation can initiate a beam modulation 1808 with selectable modulation characteristics, including period T_{MOD} and duty cycle P_{DUTY}. The beam modulation 1808 can be generated rapidly in response to the detected increase in P_{SGNL}. Without the selected beam modulation, the characteristic σ(x) can fluctuate as shown with lines 1810, 1812, 1814 and produce out of tolerance results for the laser process, including weakened or defective fabricated parts. With the selected beam modulation, the characteristic σ(x) can experience a reduced fluctuation as shown with line 1816 and can produce improved or more uniform material characteristics for the melted and fused product. At a time t₂, the P_{SGNL} decreases below a threshold for modulation and the beam modulation 1808 can terminate. At a time t₃, P_{SGNL} exhibits a spike 1818 that can correspond to fluctuations 1820, 1822, 1824 in the characteristic σ(x) that are produced if the power of the laser processing beam P_{BEAM} is not adjusted in response to the spike 1818. The laser controller produces a modulation 1826 in response to the spike 1818 of P_{SGNL} and a more consistent line 1828 is produced for the characteristic σ(x). The modulation 1826 can terminate at t₄ based on a predetermined duration, e.g., t₄-t₃, or based on detection of a separate signal associated with the target.

Having described and illustrated the principles of the disclosed technology with reference to the illustrated embodiments, it will be recognized that the illustrated embodiments can be modified in arrangement and detail without departing from such principles. For instance, elements of the illustrated embodiments can be implemented in software or hardware. Also, the technologies from any example can be combined with the technologies described in any one or more of the other examples. It will be appreciated that some procedures and functions such as those described with reference to the illustrated examples can be implemented in a single hardware or software module, or separate modules can be provided. The particular arrangements above are provided for convenient illustration, and other arrangements can be used.

## Claims

1. A method, comprising:
directing a laser beam to a target along a scan path;
determining a modulation for the laser beam, wherein the modulation includes an alternating of an intensity of the laser beam between two or more discrete laser beam power levels, wherein the alternating is based on a detected optical characteristic that indicates melt pool instabilities of a material of the target proximate the scan path; and
modulating the laser beam with the determined modulation during the directing of the laser beam along the scan path so as to reduce the melt pool instabilities.

2. The method of claim 1, further comprising detecting at the target proximate the scan path, a target characteristic that is associated with the melt pool instabilities;
wherein the determined modulation is based on the detected target characteristic.

3. The method of claim 1 or 2, wherein the modulating the laser beam is selected so as to reduce the probability of generation of a target melt ejecta.

4. The method of claim 2, wherein the target characteristic is one or more of:
- detected at an area of the laser beam at the target;
- a temperature of a melt pool of metal powder at the target or a vapor pressure associated with the metal powder or melt pool;
- a variation of an image variation associated with a target melt ejecta;
- a spectroscopic characteristic associated with a melt pool or target melt ejecta proximate the scan path and laser beam.

5. The method of any preceding claim, wherein the modulation further includes a modulation of an area of the laser beam at the target.

6. The method of claim 2, further comprising directing a probe beam at the target proximate the scan path;
wherein the detected target characteristic is associated with an interaction between the probe beam and the target proximate the scan path.

7. An apparatus, comprising:
a laser source situated to emit a laser beam;
beam coupling optics situated to direct the laser beam to a target to selectively melt a target portion;
a controller coupled to the laser source and situated to generate a laser beam modulation signal that modulates a laser beam characteristic, including a modulation of laser beam power comprising an alternation between two or more discrete laser beam power levels, at the target portion, based on a detected optical characteristic that indicates melt pool instabilities in the target portion, and modulating the laser beam with the determined modulation during the directing of the laser beam along the scan path so as to reduce the melt pool instabilities; and a detector electrically coupled to the controller and optically coupled to the target so as to detect the optical characteristic.

8. The apparatus of claim 7, wherein the laser beam modulation signal is generated by the controller in response to the detected optical characteristic;
and optionally the controller includes at least one processor and one or more computer-readable storage media including stored instructions that, responsive to execution by the at least one processor, cause the controller to compare the detected target characteristic to a set of laser beam modulation values that includes the modulation of the laser beam power between two or more discrete laser beam powers and optionally a modulation of a laser beam area, to determine a laser beam modulation that corresponds to a predetermined vapor pressure based on the comparison, and to produce the laser beam modulation signal from the determined laser beam modulation.

9. The apparatus of claim 8, wherein the detector is a photodetector optically coupled to a path of the laser beam between the laser source and the target through a beam splitter pickoff situated to receive light from the area of the target.

10. The apparatus of any of claims 8 to 9, wherein the controller includes at least one processor and one or more computer-readable storage media including stored instructions that, responsive to execution by the at least one processor, cause the controller to determine the modulation of the laser beam power between two or more discrete laser beam powers and optionally a modulation of a laser beam area, at least in part based on the detected optical characteristic, and to produce the laser beam modulation signal based on the determined laser beam modulation.

11. The apparatus of claim 10, wherein the beam coupling optics include beam scanning optics that are coupled to the controller so as to receive a laser beam scan signal generated by the controller and that are situated to receive the laser beam from the laser source and to direct the laser beam to the target with one or more scan mirrors that vary a position of the laser beam based on the laser beam scan signal;
wherein the laser beam modulation is further determined based on a scan movement of the laser beam relative to the target.

12. The apparatus of any of claims 7 to 11, wherein the beam coupling optics include a beam expander situated to receive the laser beam and to vary a beam area of the laser beam at a laser beam focus so as to vary the area of the laser beam at the target.

13. The apparatus of claim 8, wherein the laser beam modulation of laser beam power between two or more discrete laser beam powers is according to fixed or variable modulation period and duty cycle.

14. The apparatus of any of claims 8 to 13, wherein the detected optical characteristic includes or corresponds to one or more of temperature, spectral variation, emittance, reflectance, transmittance, or scattering.

15. The apparatus of any of claims 7 to 14, wherein the laser beam modulation signal is associated with a reduction in target vapor pressure and a reduction in the generation of a target melt ejecta.

16. The apparatus of any of the preceding claims, wherein the two or more discrete power or power levels includes a power or power level of zero power.

## Patentansprüche

1. Verfahren, umfassend:
Richten eines Laserstrahls an einem Abtastweg entlang auf ein Ziel;
Bestimmen einer Modulation für den Laserstrahl, wobei die Modulation ein Abwechseln einer Intensität des Laserstrahls zwischen zwei oder mehr unterschiedlichen Laserstrahlleistungspegeln beinhaltet, wobei das Abwechseln auf einer erkannten optischen Eigenschaft basiert, die Schmelzbadinstabilitäten eines Materials des Ziels in der Nähe des Abtastwegs anzeigt; und
Modulieren des Laserstrahls mit der bestimmten Modulation während des Richtens des Laserstrahls an dem Abtastweg entlang, um die Schmelzbadinstabilitäten zu reduzieren.

2. Verfahren nach Anspruch 1, ferner umfassend das Erkennen einer Zieleigenschaft an dem Ziel in der Nähe des Abtastwegs, die mit den Schmelzbadinstabilitäten assoziiert ist;
wobei die bestimmte Modulation auf der erkannten Zieleigenschaft basiert.

3. Verfahren nach Anspruch 1 oder 2, wobei das Modulieren des Laserstrahls ausgewählt wird, um die Wahrscheinlichkeit der Erzeugung eines Zielschmelzenauswurfs zu verringern.

4. Verfahren nach Anspruch 2, wobei die Zieleigenschaft ein oder mehr der Folgenden ist:
- an einem Bereich des Laserstrahls an dem Ziel erkannt;
- eine Temperatur eines Schmelzbads von Metallpulver an dem Ziel oder ein mit dem Metallpulver oder Schmelzbad assoziierter Dampfdruck;
- eine Abweichung einer mit einem Zielschmelzenauswurf assoziierten Bildabweichung;
- eine spektroskopische Eigenschaft, die mit einem Schmelzbad oder einem Zielschmelzenauswurf in der Nähe des Abtastwegs und Laserstrahls assoziiert ist.

5. Verfahren nach einem der vorhergehenden Ansprüche, wobei die Modulation ferner eine Modulation eines Bereichs des Laserstrahls an dem Ziel beinhaltet.

6. Verfahren nach Anspruch 2, die ferner das Richten eines Sondenstrahls auf das Ziel in der Nähe des Abtastwegs umfasst;
wobei die erkannte Zieleigenschaft mit einer Wechselwirkung zwischen dem Sondenstrahl und dem Ziel in der Nähe des Abtastwegs assoziiert ist.

7. Vorrichtung, umfassend:
eine Laserquelle, die zum Emittieren eines Laserstrahls positioniert ist;
eine Strahlkopplungsoptik, die zum Richten des Laserstrahls auf ein Ziel positioniert ist, um einen Zielteil selektiv zu schmelzen;
eine Steuereinheit, die mit der Laserquelle gekoppelt ist und positioniert ist zum Erzeugen eines Laserstrahlmodulationssignals, das eine Laserstrahleigenschaft moduliert, einschließlich einer Modulation von Laserstrahlleistung, umfassend ein Abwechseln zwischen zwei oder mehr unterschiedlichen Laserstrahlleistungspegeln, an dem Zielteil, basierend auf einer erkannten optischen Eigenschaft, die Schmelzbadinstabilitäten in dem Zielteil anzeigt, und Modulieren des Laserstrahls mit der bestimmten Modulation während des Richtens des Laserstrahls an dem Abtastweg entlang, um die Schmelzbadinstabilitäten zu reduzieren;
und einen Detektor, der elektrisch mit der Steuereinheit gekoppelt ist und optisch mit dem Ziel gekoppelt ist, um die optische Eigenschaft zu erkennen.

8. Vorrichtung nach Anspruch 7, wobei das Laserstrahlmodulationssignal von der Steuereinheit als Reaktion auf die erkannte optische Eigenschaft erzeugt wird;
und wahlweise die Steuereinheit wenigstens einen Prozessor und ein oder mehr computerlesbare Speichermedien beinhaltet, die gespeicherte Anweisungen beinhalten, die, auf Ausführung durch den wenigstens einen Prozessor ansprechend, die Steuereinheit zum Vergleichen der erkannten Zieleigenschaft mit einem Satz von Laserstrahlmodulationswerten veranlassen, der die Modulation der Laserstrahlleistung zwischen zwei oder mehr unterschiedlichen Laserstrahlleistungen und wahlweise eine Modulation eines Laserstrahlbereichs beinhaltet, um auf Basis des Vergleichs eine Laserstrahlmodulation zu bestimmen, die einem vorbestimmten Dampfdruck entspricht, und um das Laserstrahlmodulationssignal anhand der bestimmten Laserstrahlmodulation zu erzeugen. ##

9. Vorrichtung nach Anspruch 8, wobei der Detektor ein Photodetektor ist, der durch einen Strahlteiler-Umlenker, der zum Empfangen von Licht aus dem Bereich des Ziels positioniert ist, optisch mit einem Weg des Laserstrahls zwischen der Laserquelle und dem Ziel gekoppelt ist.

10. Vorrichtung nach einem der Ansprüche 8 bis 9, wobei die Steuereinheit wenigstens einen Prozessor und ein oder mehr computerlesbare Speichermedien beinhaltet, die gespeicherte Anweisungen beinhalten, die, auf Ausführung durch den wenigstens einen Prozessor ansprechend, die Steuereinheit zum Bestimmen der Modulation der Laserstrahlleistung zwischen zwei oder mehr unterschiedlichen Laserstrahlleistungen und wahlweise einer Modulation eines Laserstrahlbereichs wenigstens teilweise auf Basis der erkannten optischen Eigenschaft und zum Erzeugen des Laserstrahlmodulationssignals auf Basis der bestimmten Laserstrahlmodulation veranlassen.

11. Vorrichtung nach Anspruch 10, wobei die Strahlkopplungsoptik Strahlabtastoptik beinhaltet, die mit der Steuereinheit gekoppelt ist, um ein Laserstrahlabtastsignal zu empfangen, das von der Steuereinheit erzeugt wird, und zum Empfangen des Laserstrahls von der Laserquelle und zum Richten des Laserstrahls auf das Ziel mit ein oder mehr Abtastspiegeln, die eine Position des Laserstrahls auf Basis des Laserstrahlabtastsignals variieren, positioniert ist;
wobei die Laserstrahlmodulation ferner auf Basis einer Abtastbewegung des Laserstrahls relativ zu dem Ziel bestimmt wird.

12. Vorrichtung nach einem der Ansprüche 7 bis 11, wobei die Strahlkopplungsoptik einen Strahlaufweiter beinhaltet, der zum Empfangen des Laserstrahls und zum Variieren eines Strahlbereichs des Laserstrahls an einem Laserstrahlbrennpunkt positioniert ist, um den Bereich des Laserstrahls an dem Ziel zu variieren.

13. Vorrichtung nach Anspruch 8, wobei die Laserstrahlmodulation von Laserstrahlleistung zwischen zwei oder mehr unterschiedlichen Laserstrahlleistungen gemäß fester/m oder variabler/m Modulationsperiode oder Tastverhältnis ist.

14. Vorrichtung nach einem der Ansprüche 8 bis 13, wobei die erkannte optische Eigenschaft ein oder mehr von Temperatur, spektraler Variation, Emittanz, Reflexionsgrad, Transmissionsgrad oder Streuung beinhaltet oder entspricht.

15. Vorrichtung nach einem der Ansprüche 7 bis 14, wobei das Laserstrahlmodulationssignal mit einer Verringerung des Zieldampfdrucks und einer Verringerung der Erzeugung eines Zielschmelzenauswurfs assoziiert ist.

16. Vorrichtung nach einem der vorhergehenden Ansprüche, wobei die zwei oder mehr unterschiedlichen Leistungen oder Leistungspegel eine Leistung oder einen Leistungspegel von Nullleistung beinhalten.

## Revendications

1. Procédé, comprenant :
diriger un faisceau laser sur une cible le long d'un parcours de balayage ;
déterminer une modulation pour le faisceau laser, dans lequel la modulation comprend une alternance d'une intensité du faisceau laser entre deux niveaux de puissance discrets du faisceau laser ou plus, dans lequel l'alternance est basée sur une caractéristique optique détectée qui indique des instabilités de bain de fusion d'un matériau de la cible à proximité du parcours de balayage ; et
moduler le faisceau laser avec la modulation déterminée pendant que le faisceau laser est dirigé le long du parcours de balayage de manière à réduire les instabilités du bain de fusion.

2. Procédé selon la revendication 1, comprenant en outre détecter à la cible à proximité du parcours de balayage, une caractéristique de cible qui est associée aux instabilités du bain de fusion ;
dans lequel la modulation déterminée est basée sur la caractéristique de cible détectée.

3. Procédé selon la revendication 1 ou 2, dans lequel la modulation du faisceau laser est sélectionnée de manière à réduire la probabilité de génération d'une éjection de fusion de cible.

4. Procédé selon la revendication 2, dans lequel la caractéristique de cible est l'une ou plusieurs d'entre :
- détectée à une zone du faisceau laser à la cible ;
- une température d'un bain de fusion de poudre de métal à la cible ou une pression de vapeur associée à la poudre de métal ou au bain de fusion ;
- une variation d'une variation d'image associée à une éjection de fusion de cible ;
- une caractéristique spectroscopique associée à un bain de fusion ou à une éjection de fusion de cible à proximité du parcours de balayage et du faisceau laser.

5. Procédé selon l'une quelconque des revendications précédentes, dans lequel la modulation comprend en outre une modulation d'une zone du faisceau laser à la cible.

6. Procédé selon la revendication 2, comprenant en outre diriger un faisceau sonde à la cible à proximité du parcours de balayage ;
dans lequel la caractéristique de cible détectée est associée à une interaction entre le faisceau sonde et la cible à proximité du parcours de balayage.

7. Appareil, comprenant :
une source laser située pour émettre un faisceau laser ;
des optiques de couplage de faisceau situées pour diriger le faisceau laser sur une cible afin de fondre sélectivement une partie de la cible ;
un contrôleur couplé à la source laser et situé pour générer un signal de modulation de faisceau laser qui module une caractéristique de faisceau laser, y compris une modulation de puissance de faisceau laser comprenant une alternance entre deux niveaux de puissance discrets de faisceau laser ou plus, à la partie de cible, sur la base d'une caractéristique optique détectée qui indique des instabilités de bain de fusion dans la partie de cible, et moduler le faisceau laser avec la modulation déterminée pendant que le faisceau laser est dirigé le long du parcours de balayage de manière à réduire les instabilités de bain de fusion ;
et un détecteur couplé électriquement au contrôleur et couplé électriquement à la cible de manière à détecter la caractéristique optique.

8. Appareil selon la revendication 7, dans lequel le signal de modulation de faisceau laser est généré par le contrôleur en réponse à la caractéristique optique détectée ;
et le contrôleur comprend optionnellement au moins un processeur et un ou plusieurs supports de stockage lisibles par ordinateur comprenant des instructions stockées qui, en réponse à l'exécution par le au moins un processeur, font que le contrôleur compare la caractéristique optique détectée à un ensemble de valeurs de modulation de faisceau laser qui comprend la modulation de la puissance du faisceau laser entre deux niveaux de puissance discrets de faisceau laser ou plus et optionnellement une modulation d'une zone de faisceau laser, afin de déterminer une modulation de faisceau laser qui correspond à une pression de vapeur prédéterminée sur la base de la comparaison, et produire le signal de modulation de faisceau laser à partir de la modulation de faisceau laser déterminée.

9. Appareil selon la revendication 8, dans lequel le détecteur est un photodétecteur couplé optiquement à un parcours du faisceau laser entre la source laser et la cible par un capteur de diviseur de faisceau situé pour recevoir de la lumière de la zone de la cible.

10. Appareil selon l'une quelconque des revendications 8 à 9, dans lequel le contrôleur comprend au moins un processeur et un ou plusieurs supports de stockage lisibles par ordinateur comprenant des instructions stockées qui, en réponse à l'exécution par le au moins un processeur, font que le contrôleur détermine la modulation de la puissance du faisceau laser entre deux puissances discrètes de faisceau laser ou plus et optionnellement une modulation d'une zone de faisceau laser, sur la base en partie au moins de la caractéristique optique détectée, et produire le signal de modulation de faisceau laser sur la base de la modulation de faisceau laser déterminée.

11. Appareil selon la revendication 10, dans lequel les optiques de couplage de faisceau comprennent des optiques de balayage de faisceau qui sont couplées au contrôleur de manière à recevoir un signal de balayage de faisceau laser généré par le contrôleur et qui sont situées pour recevoir le faisceau laser de la source laser et diriger le faisceau laser sur la cible avec un ou plusieurs miroirs de balayage qui varient une position du faisceau laser sur la base du signal de balayage de faisceau laser ;
dans lequel la modulation de faisceau laser est déterminée en outre sur la base d'un mouvement de balayage du faisceau laser par rapport à la cible.

12. Appareil selon l'une quelconque des revendications 7 à 11, dans lequel les optiques de couplage de faisceau comprennent un étaleur de faisceau situé pour recevoir le faisceau laser et pour varier une zone de faisceau du faisceau laser à un foyer de faisceau laser de manière à varier la zone du faisceau laser à la cible.

13. Appareil selon la revendication 8, dans lequel la modulation de faisceau laser de puissance de faisceau laser entre deux puissances discrètes de faisceau laser ou plus est conforme à une période de modulation ou cycle opératoire fixe ou variable.

14. Appareil selon l'une quelconque des revendications 8 à 13, dans lequel la caractéristique optique détectée comprend ou correspond à un ou plusieurs d'entre température, variation spectrale, émittance, réflectance, facteur de transmission ou dispersion.

15. Appareil selon l'une quelconque des revendications 7 à 14, dans lequel le signal de modulation de faisceau laser est associé à une réduction dans la pression de vapeur de cible et à une réduction dans la génération d'une éjection de fusion de cible.

16. Appareil selon l'une quelconque des revendications précédentes, dans lequel les deux puissances ou niveaux de puissance discrets ou plus comprennent une puissance ou niveau de puissance de puissance zéro.
